(19) Europäisches Patentamt / European Patent Office / Office européen des brevets

(11) **EP 3 758 287 B1**

(12) **EUROPEAN PATENT SPECIFICATION**

(45) Date of publication and mention
of the grant of the patent:
**03.04.2024   Bulletin 2024/14**

(21) Application number: **20164476.2**

(22) Date of filing: **20.03.2020**

(51) International Patent Classification (IPC):
*H04L 9/32* (2006.01)      *H04L 9/08* (2006.01)
*H04L 9/14* (2006.01)      *G06F 21/60* (2013.01)
*G06F 21/78* (2013.01)

(52) Cooperative Patent Classification (CPC):
**G06F 21/602; G06F 21/78; H04L 9/0891;
H04L 9/14; H04L 9/3242**

(54) **DETERMINISTIC ENCRYPTION KEY ROTATION**

DETERMINISTISCHE VERSCHLÜSSELUNGSSCHLÜSSELROTATION

ROTATION D'UNE CLÉ DE CRYPTAGE DÉTERMINISTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **27.06.2019   US 201916454321**

(43) Date of publication of application:
**30.12.2020   Bulletin 2020/53**

(73) Proprietor: **INTEL Corporation
Santa Clara, CA 95054 (US)**

(72) Inventors:
 • **DURHAM, David M.
   Beaverton, OR 97007 (US)**
 • **CHHABRA, Siddhartha
   Portland, OR 97229 (US)**

(74) Representative: **Viering, Jentschura & Partner
mbB
Patent- und Rechtsanwälte
Am Brauhaus 8
01099 Dresden (DE)**

(56) References cited:
**US-A1- 2016 283 750      US-A1- 2016 328 335
US-A1- 2017 300 713      US-A1- 2018 276 392**

 • **TAEHOON KIM ET AL: "ShieldStore", 20190325;
   1077952576 - 1077952576, 25 March 2019
   (2019-03-25), pages 1-15, XP058428793, DOI:
   10.1145/3302424.3303951 ISBN:
   978-1-4503-6281-8**

**Description**

<u>Field of the Specification</u>

This disclosure relates in general to the field of secure processing, and more particularly, though not exclusively, to a system and method for providing deterministic encryption key rotation.

<u>Background</u>

Multiprocessor systems are becoming more and more common. In the modern world, compute resources play an ever more integrated role with human lives. As computers become increasingly ubiquitous, controlling everything from power grids to large industrial machines to personal computers to light bulbs, security demands become increasingly important.

United States Patent Application Publication document US 2016/283750 A1 discloses a secure memory with integrity codes for each entry as a protection mechanism against replay attacks.

United States Patent Application Publication document US 2017/300713 A1 discloses a method for maintaining a hash tree, including a root hash, of encrypted MACs for a set of data being stored in a secure memory.

United States Patent Application Publication documents US 2018/276392 and US 2016/328335 A1, as well as an article titled "ShieldStore" by T. Kim et al, disclose background information on the secure storage of keys and other data in TEEs and other forms of secure hardware.

It is an object of the present invention to address these issues. The scope of protection is defined by the claims.

<u>Brief Description of the Drawings</u>

The present disclosure is best understood from the following detailed description when read with the accompanying FIGURES. It is emphasized that, in accordance with the standard practice in the industry, various features are not necessarily drawn to scale, and are used for illustration purposes only. Where a scale is shown, explicitly or implicitly, it provides only one illustrative example. In other embodiments, the dimensions of the various features may be arbitrarily increased or reduced for clarity of discussion.

**FIGURE 1** is a block diagram of a processor including a memory integrity engine.

**FIGURE 2** illustrates an example of a counter tree structure used by counter mode encryption.

**FIGURE 3** is a block diagram illustrating a processor including a protected memory region.

**FIGURE 4** is a flow diagram of a method for handling a write operation.

**FIGURE 5** is a flow diagram of a method for handling a read operation.

**FIGURE 6** is a flow diagram illustrating a re-keying method.

**FIGURE 7** is a flow diagram illustrating an additional re-keying method.

**FIGURE 8** is a block diagram of a message authentication code (MAC) storage.

**FIGURE 9** illustrates advantages that can be realized by elimination of a replay tree.

**FIGURE 10** is a flowchart of a method of performing deterministic key rotation.

**FIGURE 11** is a block diagram illustrating separation across a die boundary.

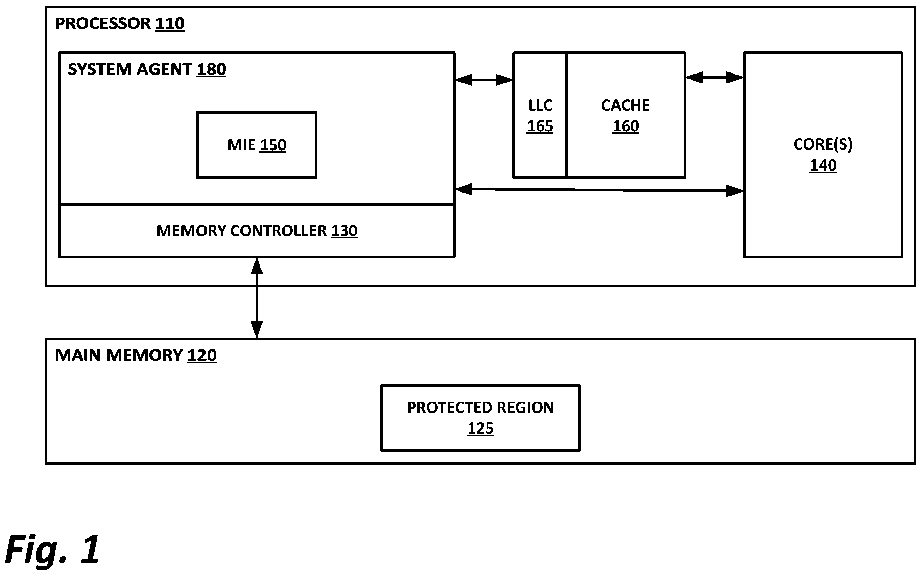

**FIGURE 1 2** is a flowchart of a method for performing a memory hash register (MHR) update.

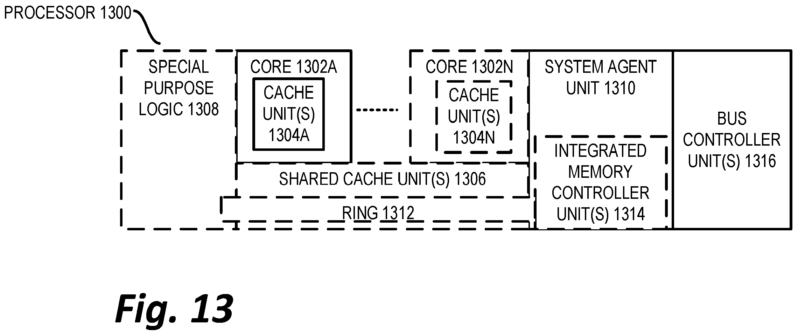

**FIGURE 13** is a block diagram of a processor that may have more than one core, may have an integrated memory controller, and may have integrated graphics according to one or more examples of the present specification.

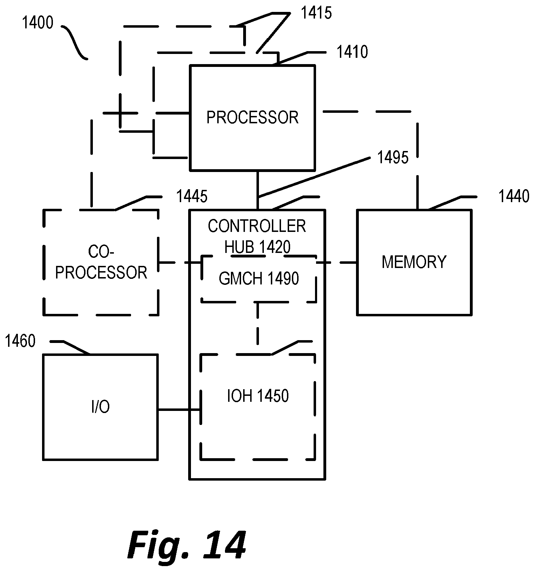

**FIGURES 14-17** are block diagrams of computer architectures according to one or more examples of the present specification.

<u>Embodiments of the Disclosure</u>

The following disclosure provides many different embodiments, or examples, for implementing different features of the present disclosure. Specific examples of components and arrangements are described below to simplify the present disclosure. These are, of course, merely examples and are not intended to be limiting. Further, the present disclosure may repeat reference numerals and/or letters in the various examples. This repetition is for the purpose of simplicity and clarity and does not in itself dictate a relationship between the various embodiments and/or configurations discussed. Different embodiments may have different advantages, and no particular advantage is necessarily required of any embodiment.

A trusted execution environment (TEE) protects third-party secrets from both hardware (physical) and software attacks on an open platform. To protect the confidentiality of the secrets, the TEE may store data in an encrypted form while the data are resident in platform memory. However, to further ensure protection, the TEE may also provide replay protection and integrity protection to resist hardware attacks that attempt to corrupt or otherwise manipulate the data in memory.

Without replay and integrity protection, an attacker with physical access to the system could use snapshots of encrypted, secret data for later replay, known as a replay attack. To achieve replay and integrity protection, the TEE may employ a memory integrity engine (MIE) that provides cryptographic mechanisms to encrypt data, and to ensure integrity of the data for replay protection. The term memory integrity engine (MIE) as used throughout this specification should be understood to broadly encompass structures such as a memory encryption engine (MEE) (including a "partial-scope" MEE that protects only a portion of memory), an MEE with or without a replay tree, total memory encryption (TME), multi-key total memory encryption (MKTME), total memory protection (TMP), or similar structures.

The memory protection provided by the MIE is used in many different TEEs, including, for example, Software Guard Extensions (SGX) by Intel® and similar. Such memory protection can also be important in cloud contexts, particularly in light of recent exploits such as "Meltdown" and "Spectre" that try to exploit caches to view unauthorized data. In the cloud, TEEs may be provided by technologies such as Intel® Trusted Domain Extensions (TDX) and Multikey Total Memory Encryption (MK TME).

In an illustrative example, an MIE of the present specification provides the known functions of an existing memory encryption engine (MEE), in addition to deterministic replay protection. An MIE with deterministic replay protection may be referred to in some instances as an MIE-DR, and advantageously may completely eliminate the need for a replay tree in at least some embodiments.

Known MEEs that prevent memory replay attacks provide a high level of security against hardware attacks. However, some of the known MEE methods result in significant performance impacts. The theory of replay protection is that an attacker should not be able to replay stale versions of data previously stored in memory. A message authentication code (MAC) is used to cryptographically authenticate data access to ensure that the access request comes from an authorized source, and to verify that the contents in memory were not modified resulting in a MAC mismatch. A successful transaction requires both the algorithm and the key to generate the correct MAC. This ensures that the transaction is secure and that it has not been tampered with.

The MAC, itself, adds on the order of 5 to 35 percent storage overhead per memory transaction (with associated performance overhead), depending on the ratio of the MAC size to the memory cache line size. In other words, the MAC must be stored along with the stored data value, resulting in the associated impact on performance and storage volume. A counter tree structure may be used to store access requests down to a hardware root of trust (RoT). The number of levels in the counter tree scales with the size of the TEE memory. In existing systems, there is an approximate storage impact of 25 percent, requiring 5 to 6 additional accesses per memory transaction. This can result in a signficant performance impact depending on the memory access frequency of the workload. In existing systems, the enclave region of memory for the TEE is approximately 128 to 256 MB. Alternative embodiments may use a version tree or Merkle tree (a tree of MAC values, the parent MAC values authenticating the next level child nodes in the tree).

However, for architectures such as MKTME, entire memories may need to be encrypted. In the data center, memories may be very large. For example, for a terabyte of protected memory, approximately 256 GB would be required simply to store the counter tree. Furthermore, because the number of levels in the tree scales with the size of the protected memory, approximately 10 or 11 levels of tree may be required to protect a terabyte of memory using existing solutions.

In some implementations, the use of a counter tree can increase the memory bandwidth usage up to 6 times on clients or up to 9 times on servers to fetch all the pertinent levels of the tree for a memory transaction. These figures are provided by way of illustrative example, and are not intended to be limiting. However, these figures do illustrate certain limitations in at least some existing systems.

Furthermore, memory access latency increases significantly with the use of protected memory, which can result in a significant performance hit for some operations, and in particular for memory intensive applications.

Some existing systems employ techniques to reduce the storage or the performance overheads, but may represent a compromise of one for the other, and in some cases do not meet the desired security goals. For example, previous solutions include the use of indirection directories for cryptographic memory protection. This reduces the storage overheads by introducing indirection trees, but does so by introducing an additional fetch to memory on top of the fetches needed for the counter tree, thereby compromising performance for storage. Other solutions include reducing the performance and storage overheads of the MEE by using key rotation. With the key rotation approach, a key associated with protected memory or a part of protected memory is changed at regular intervals, thereby reducing the window for an attacker to conduct a successful replay. However, if unmitigated, this approach can reduce the storage and performance overhead at the cost of security, because an attacker can still conduct replays while the key has not been refreshed.

Other solutions utilize ECC (Error Correction Code) memory to either separately store the MAC values per memory line or combine the ECC and MAC using techniques such as Memory Authentication Galois Integrity Correction (MAGIC), but lack replay protection and can lose memory integrity verification if the entire combined code is used to correct a full device failure (a.k.a., Chipkill).

In short, existing replay protection designs impose a 25 percent storage overhead and a high performance overhead because of the need to perform a tree walk. Some existing solutions focus on reducing storage or performance overhead, but compromise one for the other, and/or do not meet security targets. Indirection trees reduce the storage overheads, but make performance characteristics worse by introducing additional accesses to memory on top of the performance required for the replay tree. Key rotation reduces the storage and performance overheads of replay protection, but it does so with reduced security. For example, recent research indicates that a window of 1 to 2 milliseconds is sufficient for an attacker with hardware access to the machine to conduct a successful replay. With key rotation, it can take up to several seconds to many minutes to refresh memory, depending on the size of memory, thereby leaving a vulnerability window where attacks can be conducted.

However, deterministic key rotation may be used in some embodiments to provide full replay protection while eliminating the replay protection tree altogether. A deterministic replay protection system uses key rotation as a foundational concept, but may use a memory hash register (MHR) to eliminate the vulnerability window associated with key rotation.

In some examples, a processor may maintain an MHR that provides, in essence, a cryptographic summary of the whole memory. The key rotation logic calculates a running MHR value as it sweeps the entire memory contents (or some portion thereof) to update the keys associated with the memory contents, using a tweakable cipher or secure hash function that includes the physical address (or location) of each memory line. Then, as a security mechanism, the newly calculated MHR value can be compared to an on-die value of the MHR (the on-die value is known to be good with high certainty, because it is very difficult to tamper with on-die circuitry). Thus, any mismatch can be used to indicate a replay attack in the time window required to refresh the key associated with memory. The on-die value of the MHR is kept up-to-date with memory writes happening on the system. Other embodiments may store a set of MHR values either on-die or in memory, each corresponding to a portion of the memory.

In some embodiments, the deterministic key rotation mechanism disclosed herein can completely eliminate the replay tree, thereby eliminating the associated storage overheads while still providing deterministic replay protection. It should be noted, however, that the teachings of the present specification are not incompatible with the use of replay trees, and in some embodiments, the teachings described herein may be used in conjunction with, or in addition to, existing replay trees.

In those embodiments that eliminate the replay tree altogether, the elimination of the replay tree eliminates the additional memory access required on each memory access to protected memory to verify the authenticity of the line loaded. This reduces the performance overhead of replay protection. The system can do so while requiring only relatively simple hardware support for key rotation and maintenance of the disclosed MHR. This can help to aid adoption of high-security mechanisms such as TEEs like SGX and TDX. Overall, this results in increased system security, and increased user confidence in the system.

The MIE of the present specification provides a high level of security against hardware attacks, without the resulting significant performance overhead in at least some existing systems. This performance overhead can, in some cases, average 4 times across a range of server workloads. The MIE of the present specification also realizes security advantages without the storage overheads for at least some security metadata. In some embodiments, the MIE of the present specification eliminates the approximately 25 percent storage overhead of some existing designs.

Note that MKTME and TDX, unlike some existing TEEs like SGX, do not limit the size of protected memory or protected memory usage. This effectively allows for the entire memory on the platform to be protected by the MIE. As noted above, when protecting entire memories, particularly on a server where the memory may be very large, significant overheads may be incurred which can significantly impact performance and hinder adoption of these technologies. In contrast, the MIE of the present specification can protect large memories, including those in MKTME architectures, without these associated performance hits.

The FIGURES below illustrate several aspects of TEEs, including some embodiments that include a replay tree, and other embodiments that do not require a replay tree. Except where explicitly stated, the appended claims should be understood broadly to encompass any TEE, whether or not it requires a tree (such as a MAC tree, a version tree, a counter tree, an indirection tree, a Merkle tree or some other tree structure for integrity and replay prevention).

In at least some embodiments, deterministic key rotation provides full replay protection while eliminating the replay protection tree. Some embodiments use key rotation to provide key protection, but eliminate the vulnerability window associated with some existing key rotation mechanisms. These embodiments can provide deterministic replay protection. In these cases, the processor may maintain an MHR that is essentially a cryptographic summary of all the memory.

A system and method for providing deterministic encryption key rotation will now be described with more particular reference to the attached FIGURES. It should be noted that throughout the FIGURES, certain reference numerals may be repeated to indicate that a particular device or block is wholly or substantially consistent across the FIGURES. This is not, however, intended to imply any particular relationship between the various embodiments disclosed. In certain examples, a genus of elements may be referred to by a particular reference numeral ("widget 10"), while individual species or examples of the genus may be referred to by a hyphenated numeral ("first specific widget 10-1" and "second specific widget 10-2").

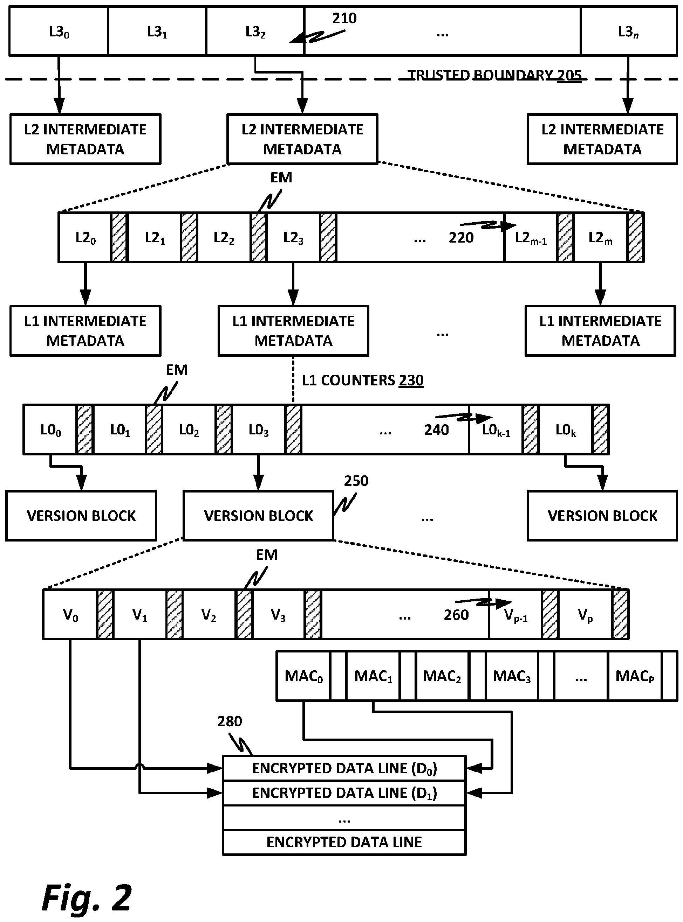

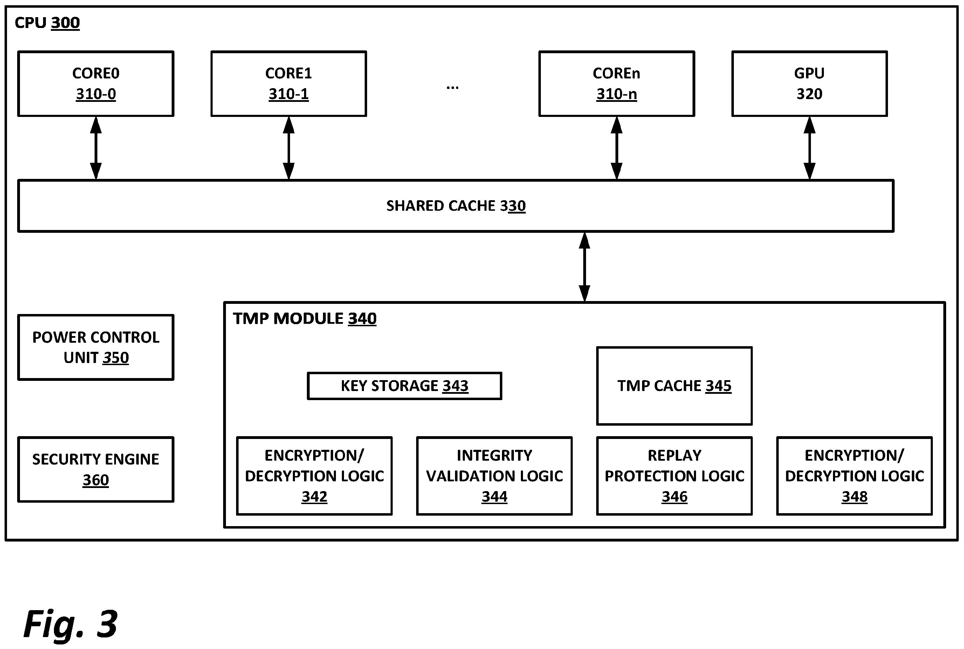

The FIGURES below illustrate several embodiments that include different features that may or may not be provided. For example, FIGURES 1 and 2 illustrate an embodiment of a TEE, and FIGURE 2 illustrates that this embodiment of the TEE can include the use of a memory tree. FIGURES 3-8 illustrate an embodiment of a TEE wherein key rotation is used. The embodiment of FIGURE 3 may be com bined with the embodiment of FIGURE 1, to provide a TEE that uses a memory tree. In other embodiments, key rotation may be deterministic or nondeterministic. Nondeterministic key rotation may be used with or without a memory tree. Deterministic key rotation may be used with or without a memory tree.

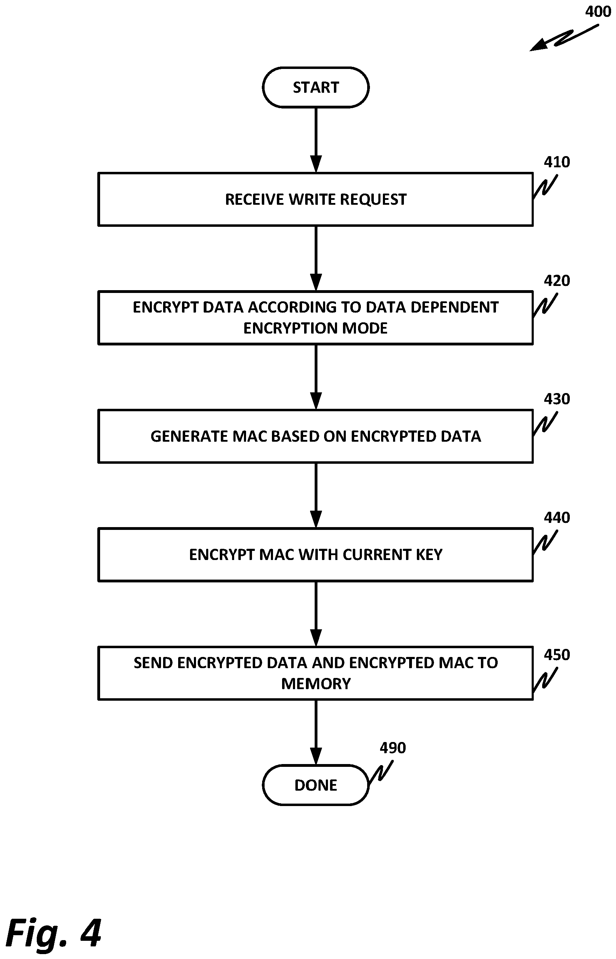

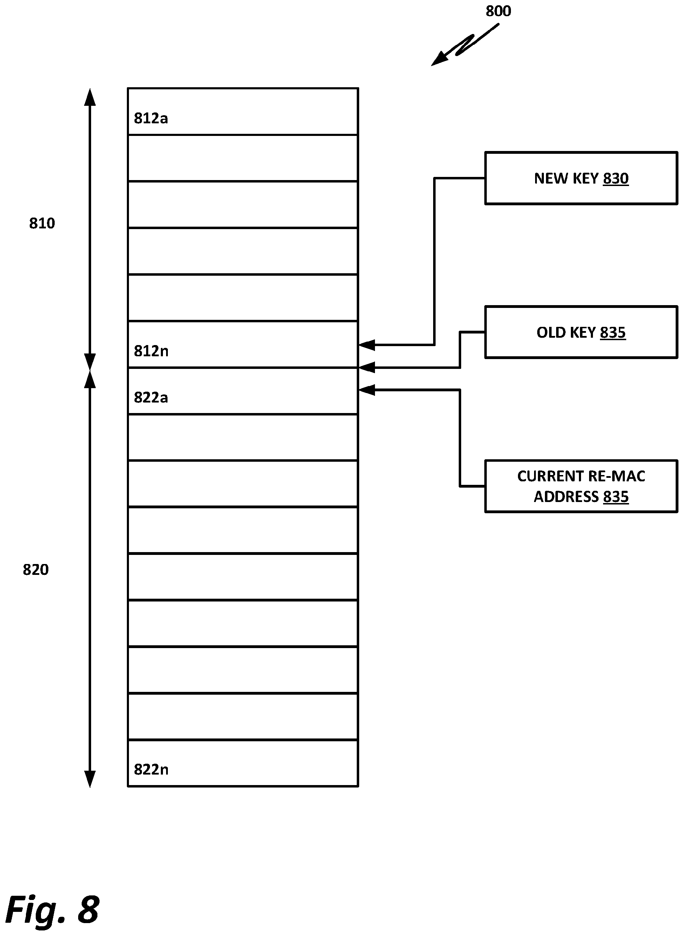

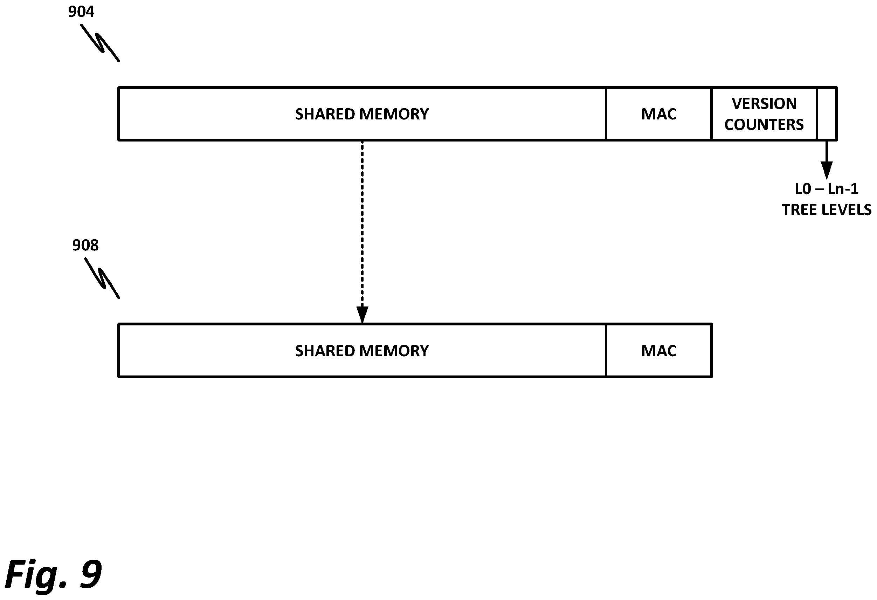

FIGURES 4-7 in particular illustrate nondeterministic key rotation. FIGURE 8 illustrates a key rotation that may be deterministic or nondeterministic. Key rotation may be used to re-encrypt memory contents using a new key. FIGURES 9-12 illustrate aspects of an embodiment that are particularly relevant to deterministic key rotation, which advantageously eliminates the replay window that is available to an attacker with hardware access in a nondeterministic key rotation. FIGURES 13-17 illustrate hardware embodiments that could provide any of the embodiments discussed herein, including embodiments with or without a tree, and/or embodiments with deterministic and/or nondeterministic key rotation.

Various terms are used throughout this specification, and may be assigned a meaning consistent with their ordinary meaning in the art. To aid in understanding of the specification, the following terms may be used. "Plaintext" includes unencrypted, sensitive (i.e., vulnerable) data. Plaintext data are most vulnerable when they are stored in main memory (note memory contents/data about to be stored to memory may be encrypted by software or other means, but this raw store data is still considered plaintext from the perspective of the MIE). "Ciphertext" includes encrypted (i.e., protected) data, encrypted by the MIE before being stored in memory. When data are stored as ciphertext in main memory, they are less vulnerable than when they are stored as plaintext, maintaining data confidentiality. "Last level cache" (LLC) is the level of cache closest to main memory, and is often the "highest" level of cache. For example, in a processor with three levels of cache (L1, L2, and L3), L3 cache may be a cache that is shared by all cores, and is the last level of cache before main memory. Ciphertext memory contents may be loaded from memory, decrypted by the MIE and moved to the cache as plaintext.

An "MIE region/protected region" includes a memory range cryptographically protected by the memory integrity engine. In current generations of Intel® SGX, this may be, for example, 128 or 256 MB. In MKTME systems, the MIE region may include the entire memory. A "data line" or "cache line" or "memory line" includes a line of data stored in main memory.

Certain of the FIGURES below detail example architectures and systems to implement embodiments of the above. In some embodiments, one or more hardware components and/or instructions described above are emulated as detailed below, or implemented as software modules.

**FIGURE 1** is a block diagram illustrating an embodiment of a processor 110 that executes memory encryption operations for confidentiality, integrity, and replay protections. The processor 110 may be used in a system that includes, but is not limited to, a desktop computer, a tablet computer, a laptop computer, a netbook, a notebook computer, a personal digital assistant (PDA), a server, a workstation, a cellular telephone, a mobile computing device, a smart phone, an Internet appliance or any other type of computing device. In another embodiment, the processor 110 may be used in a system-on-a-chip (SoC).

The processor 110 includes one or more processing cores 140 to execute instructions of the system. The processing core 140 includes, but is not limited to, prefetch logic to fetch instructions, decode logic to decode the instructions, execution logic to execute instructions, and the like. The processor 110 includes a cache 160 to cache instructions and/or data. The cache 160 includes, but is not limited to, Level 1 (L1), Level 2 (L2), and an LLC 165, or any other configuration of the cache memory within processor 110.

The memory controller 130 performs functions that enable the processor 510 to access and communicate with a main memory 120 that includes a volatile memory and/or a nonvolatile memory. Additionally, the memory may also include additional ECC memory for error detection and correction, possibly accessed in parallel to the data. In one embodiment, the memory controller 130 is coupled to a system agent 180 that includes a MIE 150. In one embodiment, the MIE 150 is located between the LLC 165 and the memory controller 130 to perform encryption, decryption, and authentication of the data lines moving in and out of a protected region 125 of the main memory 120. The MIE 150 is located on the processor die, while the memory 120 is located off the processor die.

According to one embodiment of the present specification, the MIE 150 processes multiple memory read requests in parallel to improve the access latency to the protected region 125. The MIE 150 performs counter mode encryption in which the encryption seed is unique to a data line both temporally and spatially. Spatial uniqueness can be achieved by using the address of the data line to be accessed, while temporal uniqueness can be achieved by using a counter that serves as the version of the data line. In some embodiments, the MIE 150 also protects the data lines in the protected region 125 of the main memory 120 using a counter tree structure. The versions of the data lines are part of this counter tree structure. An embodiment of the counter tree structure is described in detail below with reference to FIGURE 2.

FIGURE 2 illustrates a counter tree structure for integrity and replay protections according to embodiments of the present specification. In some embodiments, a replay tree may be provided. In embodiments where a replay tree is provided, a replay tree may be constituted as described in these FIGURES. It should be noted that the counter mode encryption described herein represents an example; other embodiments can work with alternative mechanisms of counter mode encryption. In alternative embodiments there may be more or fewer levels in the counter tree structure than what is shown in FIGURE 2.

The counter tree structure includes a hierarchy of levels of tree nodes, such as L0, L1, L2, etc. The number of levels in the tree scales with the size of the TEE memory. The top (root) level includes a sequence of on-die counters (i.e., L3 counters 210), which are stored in the internal storage of the processor die. The internal storage includes, but is not limited to, the on-die static random access memory (SRAM), register files, and any other suitable memory in the processor die. As the L3 counters 210 are on the processor die, their contents are trusted and secure from passive and active attacks. However, the trusted boundary (shown as a dotted line 205) ends at the L3 counters 210. In one embodiment, the lower levels of the counter tree lie outside of the process die (e.g., in the main memory 120 of FIGURE 1).

In one embodiment, each L3 counter 210 is linked to a block of L2 intermediate metadata, which contains a sequence of L2 counters 220. Each L2 counter 220 is linked to a block of L1 intermediate metadata, which contains a sequence of L1 counters 230. The blocks representing the L1 intermediate metadata and the L1 counters 230 are omitted from FIGURE 2 for simplicity of illustration. Each L1 counter 230 is linked to a block of L0 intermediate metadata, which contains a sequence of L0 counters 240. Each L0 counter 240 is linked to a version block 250, which contains a sequence of version nodes (represented by "V") 260. Each version node 260 is associated with an encrypted data line 280 in the protected region 125 of the main memory 120. The content of a version node 260 is the version of the associated data line, which provides a temporal component of the encryption seed in the counter mode encryption. As the lower level counters (including L2, L1 and L0 counters and the version nodes 260) are off the processor die and therefore are susceptible to attacks, each counter and each version node are encoded with an embedded MAC (shown as the blocks with hatched lines) to ensure their integrity.

In one embodiment, each embedded MAC is computed over the line in which they are embedded, using a corresponding counter from the next higher level as input. In the example of FIGURE 2, the embedded MAC for the version block 250 associated with $L0_3$ (shown in FIGURE 2 as the middle version block) is computed using the values of $V_0$-$V_P$ and its corresponding L0 counter ($L0_3$). The value of this embedded MAC is stored in the line of the version blocks 250 (shown as striped boxes in FIGURE 2). The embedded MAC for each line of L0, L1, and L2 is computed similarly. L3 counters do not need embedded MACs because the contents of L3 counters are within the trusted boundary 205. In other embodiments, the embedded MAC can be stored contiguously in the cache line.

The entire counter tree built over the protected memory region, starting from the versions up to the L3 counters, provides replay protection to the data lines in the protected memory region. The process of replay protection is as follows. When a processor performs a read operation or a write operation to a data line, the MIE 150 loads a branch of the counter tree that contains tree nodes (also referred to as branch nodes) identified by the address of the data line. The process of loading the tree nodes along a branch and verifying the authenticity of their values is herein referred to as a tree walk. Tree walks proceed from the bottom level of the counter tree (i.e., the version nodes 260) to the root nodes (i.e., the L3 counters). The authenticity of the tree node values needs to be verified because a major portion of the tree structure is resident in the main memory, and therefore is susceptible to attacks. In case of a write, the tree walk is performed to verify the authenticity of the branch node's values and to update those values. In case of a read, the tree walk is also performed to verify the authenticity of the branch node's values, but without updating those values. In one embodiment, the MIE 150 contains a finite state machine circuitry that implements the tree walk.

In one embodiment, each encrypted data line 280 is encoded with a MAC node 270 containing a MAC computed from the content of the data line 280. Each time the data line is written back to memory, the MIE 150 (of FIGURE 1) updates this MAC to reflect the most recent data value stored in memory. When a data line is read from memory, the MIE 150 verifies the value of its associated MAC node 270 to establish the integrity of the data line being read. The use of the MAC nodes 270 provides integrity protection against modification attacks on a memory-resident data line.

When the processor executes a write operation to write back one of the encrypted data lines 280 into the protected memory region (e.g., when evicting a data line from an on-die LLC to the protected region in the main memory), the MIE 150 identifies the version node 260 and the L0, L1, L2, and L3 counters (210-240) associated with that data line. The MIE 150 updates the MAC 270 associated with the data line and increments the version of that data line in the identified version node 260. In addition, the MIE 150 also updates the identified L0, L1, L2, and L3 counters (210-240) of that data line, as well as the embedded MAC associated with the updated version and the counters. This update process proceeds from the bottom level of the counter tree up to the root level of L3 counters, which are stored securely on the chip on the processor die, and hence are guaranteed protection against attacks. The counters at each level of the counter tree act as the versions for the next lower level ending with the version nodes 260 storing the versions for the data lines. Hence, on a write to a data line, all of the counters (including the version) and their associated embedded MACs along the branch identified by the data line's address are updated to reflect the version update.

In order to ensure replay protection, each time a data line is loaded from the protected region, it is verified for authenticity against the tree nodes up to the root of the counter tree. A mismatch at any level indicates a potential attack and raises a security exception, thereby defeating the attack. Specifically, when a processor executes a read operation on one of the encrypted data lines 280, the MIE 150 identifies the version and the L0, L1, L2 and L3 counters (210-240) of that data line. Read operations do not alter the values of the version and the L0, L1, L2 and L3 counters (210-240). Upon a read operation, the MIE 150 verifies the MAC 270 associated with the data line. In addition, the MIE 150 verifies the embedded MAC associated with each of the version L0, L1, L2, and L3 counters (210-240). This verification process proceeds from the bottom level of the counter tree up to the secure root counter L3.

In one embodiment, the tree nodes loaded in a tree walk are cached locally in an MIE cache, which is a local cache of the MIE 150. The MIE cache stores the values of the tree nodes (including the version nodes and the embedded MACs) that have been verified by previous requests. The content of the MIE cache is secure because it is located on the processor die. For read operations, a tree walk is terminated when the first node along the branch of the tree walk is found in the MIE cache. For write operations, a tree walk is terminated when the first node along the branch of the tree walk is found in the MIE cache, and when the cached tree node is in the modified state.

To ensure that the counter tree returns correct counter values for all requests, on a write request the MIE 150 completes the update to all of the tree nodes along the write request's branch before any other request (read or write) sharing any of those tree nodes can proceed. As read requests do not alter the values of the counter tree, some of the read requests may be processed in parallel even though these read requests share one or more of the tree nodes in the counter tree.

FIGURE 3 is a block diagram of a processor 300 including a protected memory region. As shown in FIGURE 3, processor 300 is implemented as a multicore processor and may take the form of a system-on-a-chip (SoC) or other multicore processor. As an example, embodiments may be used in a multicore processor suitable for incorporation in a variety of computing systems, ranging from portable devices such as smartphones, tablet computers, and so forth, to client computer systems and server computer systems.

As illustrated, processor 300 includes a plurality of cores 310-0 through 310-$n$. In different embodiments, cores 310 may be a set of homogeneous cores or a mix of heterogeneous cores. In some cases, cores 310 may be implemented as in-order, out-of-order, or combinations of such cores. In addition, a graphics processing unit (GPU) 320 is present. In some cases, a single graphics processor is provided to perform specialized graphics processing using a different pipeline architecture than for cores 310. Of course understand that in some cases, multiple GPUs may be provided while in other cases, a processor may not include a dedicated GPU.

A shared cache 330 couples to the various processing cores. In an embodiment, shared cache 330 may be an LLC that is shared between the various cores and graphics processor. Additional levels of a cache hierarchy may be present within the cores themselves, such as private L1 and L2 caches internal to the cores or graphics processor. Other cache architectures may exist in other embodiments.

For purposes of performing total memory protection as described herein, a total memory protection (TMP), and/or total memory encryption (TME), module 340 is present. TMP module 340 may be implemented as appropriate combinations of hardware, software, and/or firmware. In different processor implementations, the circuitry of TMP module 340 may be implemented in a standalone fashion to act as an interface between shared cache 330 and a given memory coupled to processor 300 such as a dynamic random access memory (DRAM) or other such system memory. In other cases, TMP module 340 may be implemented within an integrated memory controller of processor 300 that acts to provide an interface and control for the associated memory. In yet other cases, TMP module 340 may be implemented within a MIE that may be part of a trusted portion of the manageability engine of processor 300, or configured to operate in a TEE. Other implementations of TMP module 140 and its constituent components are possible.

With further reference to FIGURE 3, TMP module 340 itself is implemented with various individual circuits or components. As described further herein, module 340 may include a variety of different logic units configured with appropriate hardware, software, and/or firmware. As illustrated, an encryption/decryption logic 342 may be configured to perform encryption and decryption operations for TMP purposes, in embodiments, using tweakable ciphers such as XTS or LRW mode so that the physical address can be used as a tweak to the data encryption making it location dependent. In addition, an integrity validation logic 344 may be configured to perform integrity validation functions as described herein. More specifically, integrity validation logic 344 may generate an integrity value for given portions of data to be sent to the memory. In one embodiment, integrity validation logic 344 may be configured to generate a MAC for each corresponding portion of data. In addition, when data is returned from memory, integrity validation logic 344 may check the corresponding integrity value (e.g., by comparison with a validation integrity value generated based on the returned data) to verify that the data has not been compromised.

Likewise, the physical address of the data may also be incorporated in the MAC calculation making it address dependent as well and preventing data for one address location being swapped with data from another address location in memory. The MACs may be stored separately in memory (e.g. at a different memory location indexed by the data), or may be stored in a parallel physical memory such as ECC memory or may be combined with the ECC.

A replay protection logic 346 may be configured to provide replay protection by way of re-keying or other re-authentication operations, which in an embodiment may be performed according to a predetermined schedule or after predetermined time periods. Still further, arbitration logic 348 may be configured to perform arbitration between a variety of different memory operations, including read and write operations, as well as re-keying operations such as performed as described herein.

As further shown in FIGURE 3, TMP module 340 may include a variety of storages. Specifically shown in TMP module 340 is a key storage 343 and a TMP cache memory 345. Key storage 343 may be configured to store keys used to generate MACs. In an embodiment in which re-keying is performed to provide rollback protection, key storage 343 may include at least two entries, each to store one of two keys, where a first key is an old key that was used to encrypt MACs and a second key is a new key used to perform a re-keying operation as MACs within a storage undergo a re-keying cycle. In some cases, upon completion of a full re-keying cycle, the old key may be deleted and a new key to be used for a next re-keying cycle may be stored in the first entry. As further shown in FIGURE 3, TMP module 340 includes TMPcache memory 345. In an embodiment, cache memory 345 may be configured to store MACs such that off-chip access latency can be avoided for re-keying operations. In embodiments of the present specification, other TMP-associated data may also be stored in TMP cache memory 345. It is notable that the memory encryption and MAC operations may be performed using a variety of keys as well (such as MKTME), and the memory encryption logic may select which key to use to encrypt (on store) or decrypt (on load) based on a memory address alias or other metadata used by the processor as a Key Identifier (KeyID). These keys are distinct from the replay keys used to encrypt the MAC for replay protection purposes.

As further illustrated in FIGURE 3, processor 300 may include other components such as a power control unit 350, which may be implemented in one embodiment as one or more microcontrollers to perform power management operations, such as the independent control of operating frequency and/or voltage for each of cores 310 and GPU 320. In addition, a security engine 360 may be present. In some cases, security engine 360 may be implemented as a separate coprocessor to perform security operations. In some cases, a TMP module may leverage certain capabilities of security engine 360, such as encryption capabilities. In a further embodiment, rather than having a dedicated encryption/decryption logic 342 within TMP module 340, encryption/decryption operations instead may be performed within security engine 360. It should be noted that, while shown at this high level in the illustration of FIGURE 3, many variations and alternatives are possible.

**FIGURE 4** is a flow diagram of a method 400 for handling a write operation. In the embodiment shown in FIGURE 4, method 400 may be performed at least in part by a TMP module as described herein. Method 400 begins by receiving a write request (block 410). In an embodiment, such a write request may be received responsive to execution of a write instruction to write a particular amount of data (e.g., a cache line width amount) to memory. Control next passes to block 420 where the data of the write request may be encrypted. More specifically, such encryption may be performed according to an address data dependent encryption mode, such as an XTS-AES mode, where the memory address (location) is used as the tweak. It should be noted that in other embodiments, different types of data dependent encryption modes may be used.

At block 430 a MAC may be generated based on this encrypted data. In various embodiments different MAC generation processes may be used. In one particular embodiment, a 56-bit MAC value may be generated for a cache line width of data to be written to the memory. Thereafter, this MAC value itself may be encrypted (block 440). More specifically, the TMP module may store a current encryption key, which in an embodiment may take the form of a 128-bit key, or 256-bit key, and so on. This current encryption key may be used to encrypt the MAC. At block 450, the encrypted data and the encrypted MAC both may be sent to memory. In an embodiment, these different pieces of information may be sent under control of an arbitration logic, which may arbitrate these memory write operations with other memory operations. Some embodiments may use ECC memory to store the MAC, or may combine the MAC with the ECC value, in which case the ECC value may be encrypted and used as a MAC. While shown at this high level in the embodiment of FIGURE 4, many variations and alternatives are possible.

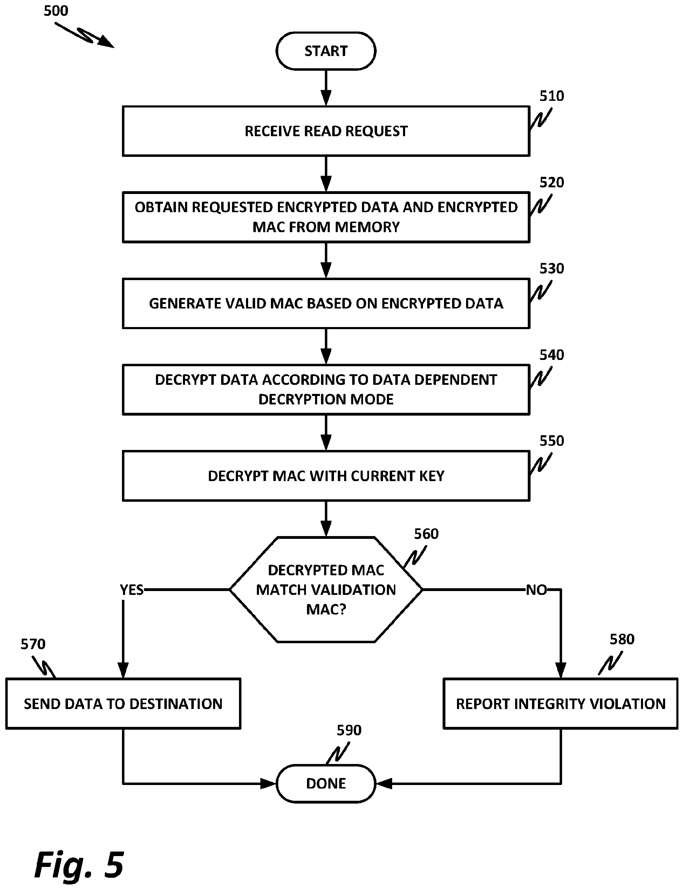

**FIGURE 5** is a flow diagram of a method 500 for handling a read operation. In FIGURE 5, method 500 may be performed by a TMP module responsive to a read request such as a read instruction to read a particular data portion from the memory. As seen, method 500 begins by receiving a read request (block 510). Responsive to this request, control passes to block 520 where the encrypted data and a corresponding encrypted MAC may be obtained from the memory. Such operations may be performed as scheduled by an arbitration logic, which arbitrates between these operations and other pending memory operations.

Thereafter, various operations are performed to process the obtained information. While shown with a linear flow for ease of illustration, in many embodiments various of these operations can be performed in parallel. Specifically, at block 520 a validation MAC may be generated. More specifically, this validation MAC may be generated based on the encrypted data. In an embodiment, the same operations as described above with regard to original MAC generation may be used to generate this validation MAC. As in the above example, e.g., a 56-bit MAC value may be generated using the encrypted data and a current encryption key. At block 540 the data itself may be decrypted according to a data dependent encryption mode. In accordance with the above discussion, in an embodiment an XTS-AES decryption may be performed, using the physical address of the memory line as the tweak, where the encryption key may be selected from a variety of keys identified by a KeyID, either as part of the address (alias) or other metadata provided by the processor as part of the memory load (read) operation. At block 550, the received encrypted MAC itself may be decrypted, also with the current key. Note that, in some cases, the operations of blocks 530, 540 and 550 may be performed in parallel. In embodiments where the MAC is stored within ECC memory, or combined with the ECC value, it may be accessed in parallel with the memory line.

Still with reference to FIGURE 5, control next passes to diamond 560 where it is determined whether the decrypted MAC value matches the validation MAC value. If so, the integrity of the obtained data is verified and at block 570 the data is sent to the destination or requester (e.g., a core). Otherwise, an integrity violation is reported (block 580) and thus the data is not provided to the destination. In some cases, to reduce latency upon decryption, the data may be sent to the destination and if an integrity violation is thereafter determined (at diamond 560) the integrity violation report may be generated at block 580 and a fault signal may be sent to the destination to prevent the earlier sent decrypted data from being committed to a state of the machine. While shown at this high level in the embodiment of FIGURE 5, many variations and alternatives are possible.

To provide rollback protection, MAC values may periodically be re-keyed so that a compromised MAC value recorded at an earlier time cannot later be replayed (at least outside of a re-keying time window) without raising an integrity violation. Different manners of performing re-keying may be performed in different embodiments. In some embodiments, the original data used to generate an original MAC value (and the MAC value itself) may be used to generate a new or re-keyed MAC value. In other cases, a re-keyed or new MAC value can be generated without using the associated data, potentially reducing complexity, bandwidth requirements, and so forth. Encrypting the MAC may require use of a cipher with a block size corresponding to the size of the MAC. For example, the SIMON, SPECK, or PRINCE ciphers may be used to encrypt and decrypt a 32-bit or 64-bit MAC value. If the stored MAC value were 128 bits, then AES could be used to encrypt the MAC value as a 128-bit block size. This choice of encryption algorithm based on the size of the MAC only needs to be made for embodiments where the MACs are stored in ECC memory. In embodiments, where MACs are stored in stolen or sequestered memory, the encryption algorithm choice can be made independent of the MAC size. In another embodiment, even when MACs are stored in ECC memory, the TMP module can collect multiple MACs to get enough bits needed for the block size of the encryption algorithm used. As an example, with a 32b MAC in ECC and AES-XTS as the encryption algorithm, the TMP engine can collect 4x32b MACs to reach the 128b needed for the AES algorithm. Note that such an implementation can offset the performance benefits of deterministic key rotation as it will need multiple cache lines to be loaded on each read access to decrypt the MAC and verify integrity of the cache line requested.

In an embodiment, when the TMP module is idle, it starts traversing through the range of MACs with the new key, regenerating each MAC in the process. If there is not sufficient idle time to update the MACs dynamically, an urgency-based mechanism may be activated to schedule MAC updates. In this scenario, sets of MACs that are scheduled for an update with the new key may have an increasing urgency value calculated. In turn, an arbitration logic may compare MAC update access urgency values against other memory traffic urgency values, and when their urgency values become high enough, the re-keying operations will be selected, even if lower priority memory traffic is stalled. While this rollback prevention mechanism is nondeterministic, it is possible to define an upper bound on how long each key window might be live before an update occurs.

In a further embodiment, latency-critical, high-priority bursts of memory traffic will not be impacted by replay protection overheads, as at least some of the rollback protection overhead can occur during idle periods of memory traffic. Additionally, the arbitration-based technique allows low-priority memory accesses to be impacted first, while letting high-priority traffic proceed. Note that the rollback time window can be configured differently for applications having varying security and other features, trading off performance overheads for a shorter rollback window.

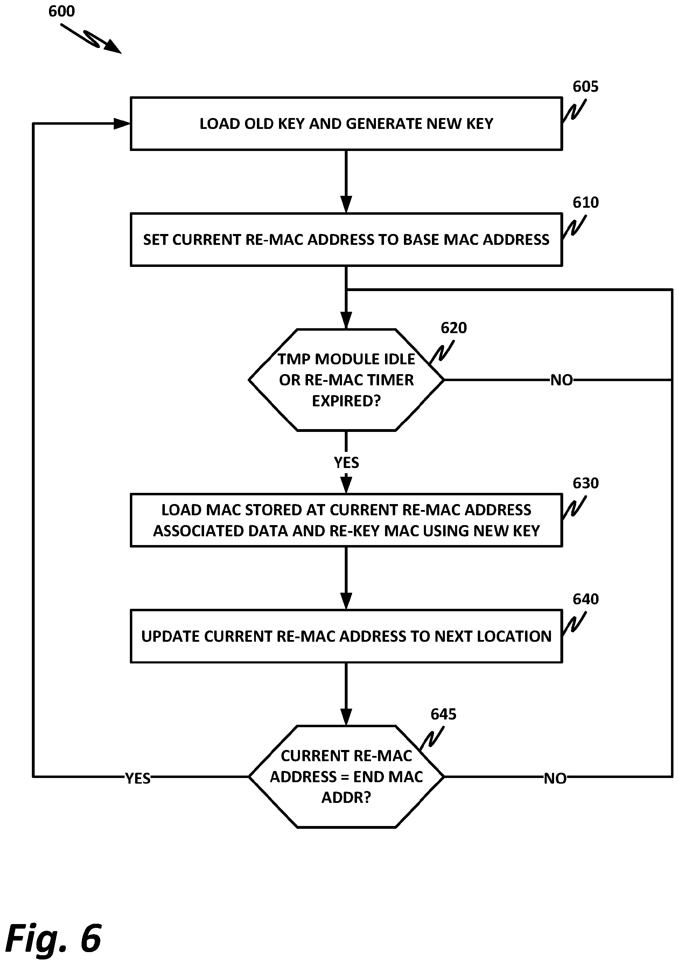

**FIGURE 6** is a flow diagram illustrating a re-keying method 600. In the embodiment shown in FIGURE 6, method 600 may be performed to re-key MAC values using both the original MAC value and its associated data.

When using a keyed MAC algorithm, the associated data lines are also to be loaded and used to perform a re-keying. That is, while only 10 percent of memory is re-keyed, the remaining memory is also loaded to compute the new MAC (which is data dependent) with the new key. In an embodiment, a TMP module may be configured to perform method 600. As seen, method 600 begins by loading an old key and generating a new key (block 605). In an embodiment, this old key may be stored in a storage of the TMP module itself. The new key may be generated according to common key generation practices, utilizing a random number generator, hardware specific seed, and some cryptographic primitives to increase the entropy of the key. Similarly, the new key also may be stored in a storage of the TMP module. At block 610, a current re-MAC address may be set to a base MAC address. This current re-MAC address acts as a pointer to a particular location in a storage that includes the MAC values, and the base MAC address may be the address within the storage at which the first generated MAC value is stored. In the embodiment of FIGURE 6, this storage may be a system memory. In other cases, the memory may be a cache memory of the processor such as a dedicated MAC storage.

Control next passes to diamond 620 to determine whether the TMP module is idle or a re-MAC timer has expired. In an embodiment, this re-MAC timer may be set at a configurable value to provide an appropriate level of rollback protection. The lower the value of this timer, the greater the protection that is afforded, while at the same time, the greater the impact on performance due to re-keying operations. In a particular embodiment, this re-MAC timer may be set on the order of approximately a given number of minutes (which may be on the order of many billions of processor clock cycles).

If it is determined that this timer has expired or the TMP module is idle (and thus at an ideal time to perform re-keying), control passes to block 630. At block 630, a MAC stored in the current MAC address may be loaded, along with its associated data. Using this information, the MAC may be re-keyed and the resulting new MAC may be stored at the current MAC address. To perform this re-keying the MAC validation regenerates the original MAC based on the original key and data. If the regenerated MAC matches the MAC loaded from memory, then the validation is successful and a new MAC may be generated. The new MAC is generated based on the new key and data. The new MAC is then written back to memory, replacing the original MAC.

Next, control passes to block 640 where the current re-MAC address may be updated to a next location to provide a pointer to the next MAC stored in the memory. Control passes then to diamond 645 to determine whether the current MAC address reaches the end of the region of memory holding the MAC values. If so, the current iteration of re-keying is completed and control passes back to block 605 above, to be performed during a next re-keying iteration. Otherwise, control passes to diamond 620 where a re-keying operation for a next MAC within the storage is performed.

As discussed above, the re-keying of FIGURE 6 uses both the original MAC value and the associated data, and thus the bandwidth of obtaining the data is incurred. In other cases, a re-keying operation may be performed without the associated data. In this example, a MAC algorithm such as a secure hash algorithm (SHA, e.g. SHA3) or message-digest algorithm 5 (MD5) may be used. However, the final MAC is generated by encrypting this MAC value with the current MAC key. This differs from a standard keyed MAC construction (e.g., SHA-based hash message authentication code, or KMAC) as the data need not be available for re-keying. Encrypting the MAC may require use of a cipher with a block size corresponding to the size of the stored MAC. For example, the SIMON, SPECK, or PRINCE ciphers may be used to encrypt and decrypt a 32-bit or 64-bit MAC value. If the stored MAC value were 128 bits, then AES could be used to encrypt the MAC value as a 128-bit block size, and so on. This choice of encryption algorithm based on the size of the MAC only needs to be made for embodiments where the MACs are stored in ECC memory. In embodiments, where MACs are stored in stolen or sequestered memory, the encryption algorithm choice can be made independent of the MAC size. In another embodiment, even when MACs are stored in ECC memory, the TMP module can collect multiple MACs to get enough bits needed for the block size of the encryption algorithm used. As an example, with a 32b MAC in ECC and AES-XTS as the encryption algorithm, the TMP engine can collect 4x32b MACs to reach the 128b needed for the AES algorithm. Note that such an implementation can offset the performance benefits of deterministic key rotation as it will need multiple cache lines to be loaded on each read access to decrypt the MAC and verify integrity of the cache line requested.

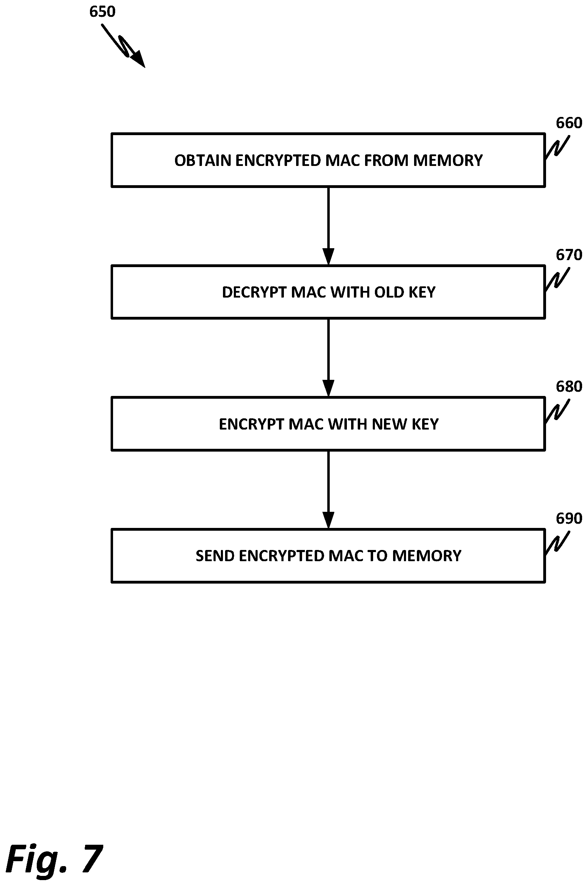

**FIGURE 7** is a flow diagram illustrating an additional re-keying method. In the embodiment shown in FIGURE 7, method 650, which may also be performed by the TMP module, may perform re-keying without the associated data. As illustrated, method 650 begins by obtaining an encrypted MAC from memory (block 660). At block 670 this MAC may be decrypted using the old key. Thereafter, the MAC is encrypted with the new key (block 680). Finally, at block 690, the encrypted MAC is sent back for storage in memory. As illustrated, this re-keying performed without the associated data may be more efficient in terms of computation complexity and reduced bandwidth consumption. As with the above method 600, the re-keying shown in method 650 may be performed iteratively for all MACs stored in the given MAC storage and in addition, these re-keying operations may be performed during idle periods of the TMP module and/or when a re-keying timer has expired.

Embodiments thus may be used to detect a rollback. Consider the following scenario:

DL1: Data line value at time t1
DL2: Data line value at time t2
MAC1: MAC associated with DL1
MAC2: MAC associated with DL2
MACKEY1: MAC key at time t1
MACKEY2: MAC key at time t2

If an attacker records DL1 and MAC1 and replays them at time instant t2 (at which point the MAC key has been refreshed), the MAC check will fail as MAC1 was calculated over DL1 using MACKEY1, and the hardware will generate the MAC over DL1 using MACKEY2. Hence, a rollback will be detected. Further, this rollback detection occurs based on a re-keying in which only the MAC is fetched from memory for the re-keying. Embodiments thus provide low-overhead confidentiality, integrity, and rollback protection for data in a system memory (and/or other off-chip memory).

**FIGURE 8** is a block diagram of a message authentication code (MAC) storage 800. MAC storage 800 may be a dedicated cache memory of a processor (such as TMP cache 345 of FIGURE 3) or a region of a system memory. As seen, MAC storage 800 includes a first region 810 to store re-keyed MACs and a second region 820 to store MACs generated with a prior key. Thus, entries 812a-812n store MAC values generated with a new key 830, while entries 822a-822n store MAC values generated using an old key 835. While shown at this high level in the illustration of FIGURE 8, many variations and alternatives are possible. Furthermore, note that while FIGURE 8 shows a MAC memory as a contiguous range, embodiments are not so limited. In other cases, MAC values may be stored at non-contiguous locations of a memory. However, understand that such MAC values may have a definite relationship to a corresponding associated data line address, such that given a data line address, the corresponding MAC also can be accessed. Embodiments may be implemented in an SoC or other processor for incorporation into a wide variety of platforms.

In some cases, a memory integrity engine with deterministic rotation (MIE-DR) embodies two primary cryptographic mechanisms, namely encryption and memory integrity. The encryption mechanism encrypts data as written to off-chip memory, and decrypts it when it is read from memory. This ensures that data are always stored as ciphertext when it leaves the physical hardware of the chip boundary. This provides confidentiality protection against passive attacks. To provide integrity protection or protection against active attacks, the MIE-DR associates a MAC with each line of data in memory. The MAC is updated on a write to memory and verified on a read from memory. A verification failure indicates modification of data when resident in memory is signaled as a security exception. This could be raised, for example, as "poison" or "system freeze." In addition to these mechanisms, deterministic key rotation may be employed by the MIE-DR to provide protection against replay attacks. These are a class of attacks where an attacker with physical access to memory records old data and an associated MAC, and replays at a later point in time in an attempt to pass it off as valid data.

Some embodiments employ a replay tree on protected memory to protect against replay attacks. With a replay protection tree, a tree of metadata is built over memory with roots of the tree stored securely on-die, and thus outside the reach of the attacker. On every read access to protected memory, the replay tree is walked and verified up to the secure root. This process is known as a tree walk, and is a source of processing and bandwidth overhead. The tree walk ensures that an attempt to modify data is caught at one of the levels in the tree, with a tree walk climbing to the secure root stored on-die in the worst case.

At least some embodiments avoid the overhead associated with a traditional tree walk. These can be avoided by deterministic key rotation.

Deterministic key rotation uses key rotation as a primitive to provide replay protection. Key rotation as a primitive method has already been described in this specification. With key rotation, the MAC values in memory are refreshed periodically by re-encrypting them.

FIGURE 8 illustrates the basic mechanism of key rotation. Specifically, FIGURE 8 illustrates a key rotation cycle in progress. A key rotation engine reads the MACs with the old key and re-encrypts them with the new key.

With at least some embodiments of nondeterministic key rotation, hardware replay is possible for a particular cache line in the interval when it has the same key. As an example, an attacker recording a data line and associated MAC cannot replay the cache line and MAC at a later point in time once the key used by the rotation engine has changed. The time window during which an attacker can conduct a successful replay may be referred to as a "vulnerability window." While key rotation significantly reduces the performance and storage overheads by eliminating the replay tree altogether, not all embodiments provide deterministic anti-replay guarantees, because the vulnerability window still exists.

To provide full replay protection, a processor may provide a memory hash register (MHR). The MHR is a representation of the entire protected memory (or a region thereof) maintained on-die. The MHR may be maintained over the MACs for the entire protected memory. As the key rotation logic iterates over the MAC region periodically to change the key associated with the MAC region, it also computes the running MHR for the current memory image. At the end of a refresh cycle, the MHR computed is compared with the on-die MHR. A match indicates that the protected memory is as written by the allowed entities (e.g., the central processing unit or other permitted devices). A mismatch indicates a hardware replay attack, at which point a security exception may be signaled.

For purposes of illustration, an exclusive-or (XOR) function is used to calculate the MHR. In other embodiments, any other operation may be used as long as it allows updates to individual components over which it is computed. In at least some embodiments, the XOR function could be replaced by a Galois field multiplication (GFMUL) operation. In other embodiments, other functions may be used, for example, finite field operations.

The protected memory may be initialized, for example, by the basic input-output system (BIOS) to ensure that the MAC values associated with memory are generated correctly to allow software to run without any functional failures. As part of the initialization, an initial MHR may be com puted.

At runtime, the key rotation logic may operate on the MAC region in memory, reading one MAC line at a time, decrypting it with the old key, and re-encrypting it with the new key. On the read of a MAC value, the running MHR may be updated as follows:

Running hash = FN (Running hash, MAC), where FN indicates the function used for computing the MHR

With an XOR operation, the running hash is simply calculated as follows:

```
Running hash = Running Hash XOR MAC
```

At the end of the key rotation, which may occur when the entire MAC region in memory has been re-encrypted, the running hash that represents the memory image as seen by the rotation cycle (before re-encryption to move the blocks to the next rotation cycle's keying material) is compared with the on-die hash that represents the memory image of data lines that were protected with the key used for the last rotation cycle. A mismatch indicates a hardware replay attack on memory, and may be flagged as a security exception. As new cache lines are stored to memory on-demand, the running hash is updated by first fetching the old data MAC from memory, unrolling that from the running hash register (e.g. XOR operation with the MHR and the old MAC value for the memory line), and then applying the new MAC value for the newly-stored cache line (e.g. XOR operation with the MHR and the new MAC value). The MHR is thus designed to always reflect the current set of memory integrity values.

FIGURE 9 illustrates advantages that can be realized by elimination of the replay tree. Specifically, FIGURE 9 compares a memory region 904 that includes a replay tree with a memory region 908 that does not require a replay tree. In memory region 904, in addition to the shared memory, there is provided a message authentication code (MAC) as well as version counters and tree levels. For an *n*-level tree, tree levels L0 through Ln are described. For example, FIGURE 2 illustrates a four-level tree with levels L0 through L3. In contrast, memory region 908 includes only shared memory and a MAC. While the MAC of memory region 908 provides some storage overhead, it is not necessary to walk the replay tree, and thus memory access efficiency can be greatly increased.

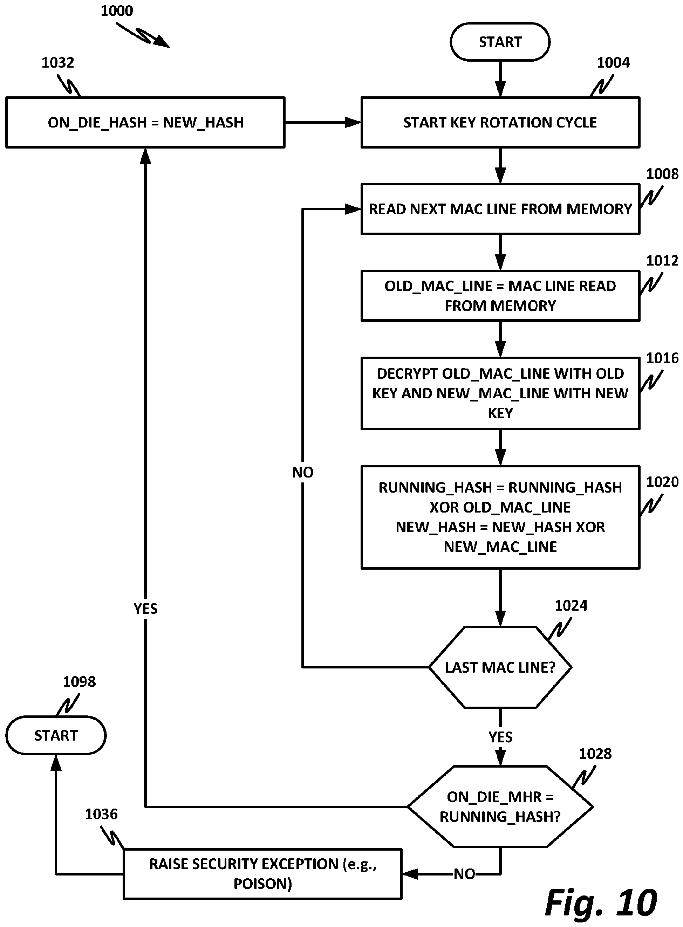

FIGURE 10 is a flowchart of a method 1000 of performing deterministic key rotation. As illustrated in this flowchart, embodiments of the present specification may use an on-die hash, known as the memory hash register (MHR), which represents the state of memory blocks protected with the old key cycle. The key rotation cycle reads MAC lines from memory, decrypts them with the old key, and re-encrypts them with the new key.

As part of this process, the key rotation logic may also generate its own version of the memory hash. At the end of this cycle, the memory hash version computed by the key rotation cycle can be compared with the on-die MHR, where a match indicates that there has been no attack on the system.

The MHR may be considered secure because it is on-die, and thus represents the correct memory image. At the end of the cycle, the on-die hash may be replaced with the new hash value to allow the MHR to represent the memory state with the key ring material of the most recently completed key rotation cycle. As illustrated in method 1000, coverage of the hash value registers can be maintained on-die.

Starting in block 1004, the system starts the key rotation cycle.

In block 1008, the processor reads the next MAC line from memory.

In block 1012, the old MAC line (OLD_MAC_LINE) is assigned the MAC line that was read from memory in block 1008.

In block 1016, the processor decrypts OLD_MAC_LINE with the old key, and NEW_MAC_LINE with the new encryption key. Reference is made to FIGURE 8 to see rotation of the old key 835 with new key 830.

In block 1020, the running hash (RUNNING_HASH) is computed as a function of the old MAC line. For example, if the function is XOR, then the running hash is computed as RUNNING_HASH XOR OLD_MAC_LINE. The new hash is also computed. This may be computed, for example, as a function of the new hash and the new MAC line. As before, if the XOR function is used, NEW_HASH may be computed as NEW_HASH XOR NEW_MAC_LINE. Note that XOR is provided here as only a nonlimiting example of a function that may be used. In other embodiments, other functions may be used to convolute or otherwise combine the hash with the MAC line value.

In decision block 1024, the system determines whether the MAC line previously read was the last MAC line. If it was not the last MAC line, then control returns to block 1008, and the next MAC line is read from memory.

Returning to decision block 1024, if the previously read MAC line was the last MAC line, then in block 1028, the processor checks to see whether the on-die MHR register (ON_DIE_MHR) checks out with the running hash (RUNNING_HASH).

If the on-die MHR register checks out with the running hash, then in block 1032, the on-die hash (ON_DIE_HASH) is given the value of the new hash (NEW_HASH). This means that the MHR register checks out with the current state of the memory, and no attack has been made on the processor.

Returning to decision block 1028, if the on-die MHR does not check out with the running hash, this may indicate that the processor has been attacked, or that a serious error has occurred. In that case, in block 1036, the processor may raise a security exception (e.g., POISON). This indicates that the state of the processor data is not safe, and some remedial action may be required.

In block 1098, the method is done.

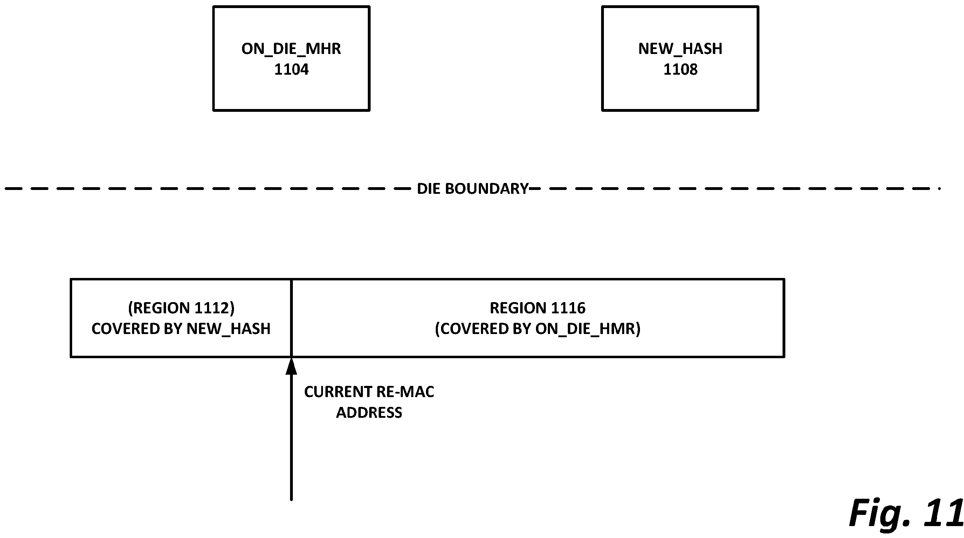

**FIGURE 11** is a block diagram illustrating separation across a die boundary. While FIGURE 8 illustrates a key rotation process eschewing static values for the on-die MHR and the new hash, in reality, there may be memory transactions ongoing in the system. These memory transactions will impact the value of the hash registers. More specifically, write requests going to memory update the data in the hash, and also require an update to the value of the registers. This may be required to represent the writes happening to the regions covered by the corresponding hash registers. Because the on-die MHR covers memory protection by the keying material of the last rotation cycle, any writes that occur to the region that has not been re-keyed by the rotation cycle must update the MHR.

As described above, the function used for calculating the memory hash may be any function that allows updates to individual components making up the hash. The example above provides an example of an XOR function. With the XOR function, this translates to reading the old MAC value from memory and XORing it with the MHR. This effectively removes the old value from the hash value. The value can then be computed with an XOR with the newly computed MAC.

This update operation is performed on the new hash value as well, because there can be writes happening to the region re-keyed by the current rotation cycle. The new hash may need to account for these writes before updating the on-die MHR 1104 with the new hash value 1108. These may need to be updated at the end of the rotation cycle.

Beyond the die boundary, this leads to a situation where the current re-MAC address divides the memory into a first region 1112 covered by the new hash, and a second region 1116 covered by on-die MHR.

On this figure, an embodiment is illustrated wherein a single pair of registers are used to protect a single region of memory (up to and including the entire memory). In other embodiments, multiple pairs of MHR registers could be used to protect multiple regions of memory (e.g., for different TEEs, per-application regions, or for different tenants sharing memory in a data center).

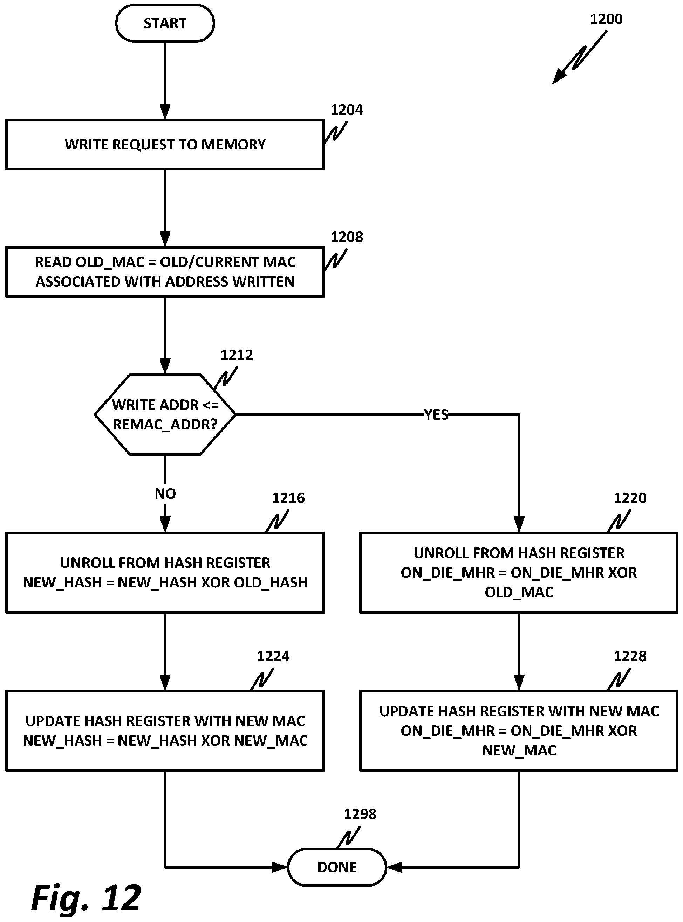

**FIGURE 12** is a flowchart of a method 1200 for performing the MHR update as illustrated in FIGURE 11. With the hash update flow illustrated in FIGURE 12, there is an additional read that is incurred to read the old MAC value and unroll it from the corresponding hash register. In some embodiments, this will incur a minimal penalty, because the additional read is only needed on writes that are off the critical path. To further minimize bandwidth overhead, a system of the present specification uses an on-die cache that caches the MAC values for lines that are likely to be written back. The replacement policy for this cache can be based on retaining MACs associated with least-recently used lines, or some other similar heuristic to maximize the hit rate in the cache for the old MACs.

Beginning with FIGURE 1204, the processor receives a write request to the memory.

In block 1208, the processor reads the old MAC (OLD_MAC), and assigns the value of the old or current MAC associated with the address being written, as appropriate.

In decision block 1212, the processor checks to see whether the write address is less than or equal to the re-MAC address (REMAC_ADDR).

If the write address is less than or equal to re-MAC_ADDR, then in block 1216, the processor unrolls from the hash register and assigns NEW_HASH = NEW_HASH XOR OLD_HASH. The result of this is a yield of masking bits that can be used to isolate the new parts of the hash.

In block 1224, the processor updates the hash register with the new MAC. It assigns NEW_HASH = NEW_HASH XOR NEW_MAC.

In block 1298, the method is done.

Returning to decision block 1212, if the write address is greater than the re-MAC address, then in block 1220, it unrolls from the hash register ON_DIE_MHR = ON_DIE_MHR XOR OLD_MAC.

In block 1228, it updates the hash register with the new MAC and assigns ON_DIE_MHR = ON_DIE_MHR XOR NEW_MAC.

This system realizes advantages over nondeterministic key rotation systems, where attacks performed within a vulnerability window may go undetected. In this system, replay attacks are deterministically detected at the end of the key rotation cycle as a mismatch with the current MHR value. Note that the system of the present specification does not require any change to the integrity verification logic that the MIE implements. Rather, existing MIE integrity verification logic may be used. More specifically, on a read from memory, the corresponding MAC may be read and verified by the encryption engine to ensure authenticity. On a write to memory, the MAC value associated with the line being written back may be updated.

In some embodiments, the logic described herein may be implemented in the encryption engine sitting on the path to memory (e.g., the memory channel). This path may be used to leverage patrol scrubbing hardware for implementation on servers that periodically read memory to detect and correct errors.

It should also be noted that an implementation may choose to have regions in memory, with each region associated with its own hash registers and key rotation logic. As an example, this type of organization may be useful when different regions have varying security requirements, and the key associated with the MACs can then be rotated at different frequencies to meet the requirements of the associated region. Regions rotated at higher frequency may be used for storing data required for higher levels of security.

In some embodiments (e.g., on systems employing error-correcting code memory) logic to proactively read memory to detect and correct any errors found may already exist. Some embodiments may integrate the key rotation logic with that existing logic.

For example, some systems combine the error correcting code (ECC) and MAC into one. When combined with the MHR running hash method, this allows correction of full DRAM chip failures (on a DIMM, full device failures being detected with multiple read or read/write tests to detect corruption related to a particular device, or BIST), while still preserving memory integrity. Per-memory-line integrity may be lost if the combined ECC+MAC code is used to correct an entire failed device (e.g. a failed chip, bank or rank on the DIMM). However, the MHR running hash can still be used to determine if there was a security violation. This is because the sum integrity value (the MHR) can also detect integrity violations (e.g. intentional security violations by an adversary physically manipulating a system, or other uncorrectable errors)-even when the combined $ECC_+$ MAC methods are used for full device data recovery. On a full device failure and recovery, the MHR can be verified against the contents of memory, by recalculating all the MAC values for all the recovered memory lines and comparing to the MHR, to validate that no undetected memory corruption occurred after a full device failure was corrected. Sparring techniques (e.g., combining two data lines with one ECC device) may then be used to re-apply the combined per-line ECC+ MAC values using the remaining memory allowing full system recoverability.

**FIGURE 13** is a block diagram of a processor 1300 that may have more than one core, may have an integrated memory controller, and may have integrated graphics according to embodiments of the specification. The processor of FIGURE 13 may be configured to provide the method of deterministic encryption key rotation as disclosed in the present specification.

The solid lined boxes in FIGURE 13 illustrate a processor 1300 with a single core 1302A, a system agent 1310, a set of one or more bus controller units 1316, while the optional addition of the dashed lined boxes illustrates an alternative processor 1300 with multiple cores 1302A-N, a set of one or more integrated memory controller unit(s) 1314 in the system agent unit 1310, and special-purpose logic 1308.

Thus, different implementations of the processor 1300 may include: 1) a CPU with the special-purpose logic 1308 being integrated graphics and/or scientific (throughput) logic (which may include one or more cores), and the cores 1302A-N being one or more general purpose cores (e.g., general purpose in-order cores, general purpose out-of-order cores, a combination of the two); 2) a coprocessor with the cores 1302A-N being a large number of special-purpose cores intended primarily for graphics and/or scientific throughput; and 3) a coprocessor with the cores 1302A-N being a large number of general purpose in-order cores. Thus, the processor 1300 may be a general purpose processor, coprocessor or special-purpose processor, such as, for example, a network or communication processor, compression engine, graphics processor, GPGPU, a high-throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1306, and external memory (not shown) coupled to the set of integrated memory controller units 1314. The set of shared cache units 1306 may include one or more mid-level caches, such as level 2 (L2), level 3 (L3), level 4 (L4), or other levels of cache, an LLC, and/or combinations thereof. While in one embodiment a ring-based interconnect unit 1312 interconnects the integrated graphics logic 1308, the set of shared cache units 1306, and the system agent unit 1310/integrated memory controller unit(s) 1314, alternative embodiments may use any number of well-known techniques for interconnecting such units. In one embodiment, coherency is maintained between one or more cache units 1306 and cores 1302A-N.

In some embodiments, one or more of the cores 1302A-N are capable of multithreading. The system agent 1310 includes those components coordinating and operating cores 1302A-N. The system agent unit 1310 may include, for example, a power control unit (PCU) and a display unit. The PCU may be or include logic and components needed for regulating the power state of the cores 1302A-N and the integrated graphics logic 1308. The display unit is for driving one or more externally connected displays.

The cores 1302A-N may be homogenous or heterogeneous in terms of architecture instruction set; that is, two or more of the cores 1302AN may be capable of executing the same instruction set, while others may be capable of executing only a subset of that instruction set or a different instruction set.

### *Example Computer Architectures*

**FIGURES 14-17** are block diagrams of example computer architectures. The architectures of FIGURES 14-17 may be configured to provide the method of deterministic encryption key rotation, as disclosed in the present specification.

Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **FIGURE 14,** shown is a block diagram of a system 1400 in accordance with one embodiment. The system 1400 may include one or more processors 1410, 1415, which are coupled to a controller hub 1420. In one embodiment the controller hub 1420 includes a graphics memory controller hub (GMCH) 1490 and an input/output hub (IOH) 1450 (which may be on separate chips); the GMCH 1490 includes memory and graphics controllers to which are coupled memory 1440 and a coprocessor 1445; the IOH 1450 couples input/output (I/O) devices 1460 to the GMCH 1490. Alternatively, one or both of the memory and graphics controllers are integrated within the processor (as described herein), the memory 1440 and the coprocessor 1445 are coupled directly to the processor 1410, and the controller hub 1420 in a single chip with the IOH 1450.

The optional nature of additional processors 1415 is denoted in FIGURE 14 with broken lines. Each processor 1410, 1415 may include one or more of the processing cores described herein and may be some version of the processor 1300.

The memory 1440 may be, for example, dynamic random access memory (DRAM), phase change memory (PCM), or a combination of the two. For at least one embodiment, the controller hub 1420 communicates with the processor(s) 1410, 1415 via a multidrop bus, such as a frontside bus (FSB), point-to-point interface such as Ultra Path Interconnect (UPI), or similar connection 1495.

In one embodiment, the coprocessor 1445 is a special-purpose processor, such as, for example, a high-throughput MIC processor, a network or communication processor, compression engine, graphics processor, GPGPU, embedded processor, or the like. In one embodiment, controller hub 1420 may include an integrated graphics accelerator.

There can be a variety of differences between the physical resources 1410, 1415 in terms of a spectrum of metrics of merit including architectural, microarchitectural, thermal, power consumption characteristics, and the like.

In one embodiment, the processor 1410 executes instructions that control data processing operations of a general type. Embedded within the instructions may be coprocessor instructions. The processor 1410 recognizes these coprocessor instructions as being of a type that should be executed by the attached coprocessor 1445. Accordingly, the processor 1410 issues these coprocessor instructions (or control signals representing coprocessor instructions) on a coprocessor bus or other interconnect, to coprocessor 1445. Coprocessor(s) 1445 accepts and executes the received coprocessor instructions.

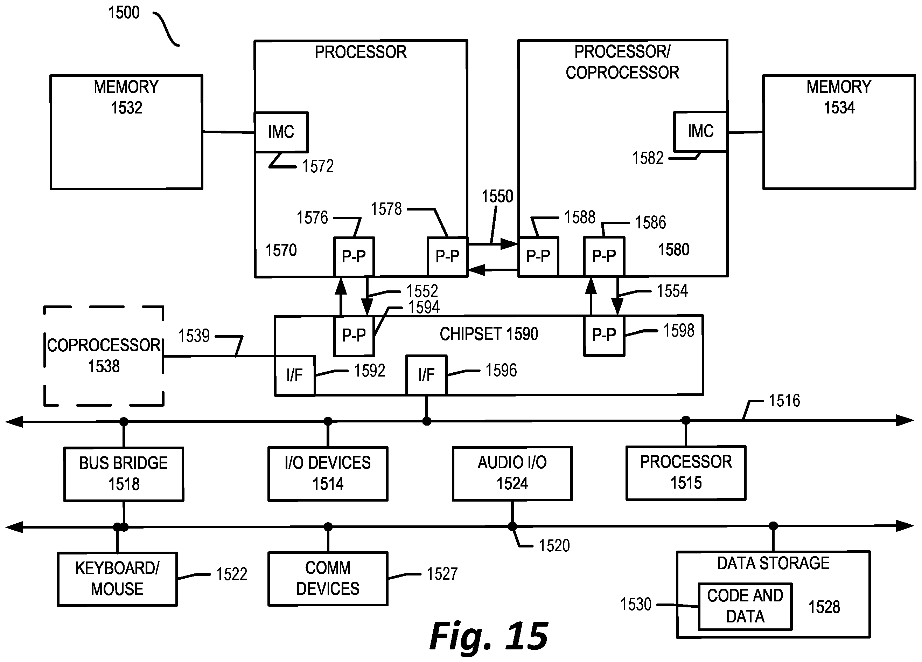

Referring now to **FIGURE 15,** shown is a block diagram of a first more specific exam ple system 1500. As shown in FIGURE 15, multiprocessor system 1500 is a point-to-point interconnect system, and includes a first processor 1570 and a second processor 1580 coupled via a point-to-point interconnect 1550. Each of processors 1570 and 1580 may be some version of the processor 1300. In one embodiment, processors 1570 and 1580 are respectively processors 1410 and 1415, while coprocessor 1538 is coprocessor 1445. In another embodiment, processors 1570 and 1580 are respectively processor 1410 coprocessor 1445.

Processors 1570 and 1580 are shown including integrated memory controller (IMC) units 1572 and 1582, respectively. Processor 1570 also includes as part of its bus controller units point-to-point (P-P) interfaces 1576 and 1578; similarly, second processor 1580 includes P-P interfaces 1586 and 1588. Processors 1570, 1580 may exchange information via a point-to-point (P-P) interface 1550 using P-P interface circuits 1578, 1588. As shown in FIGURE 15, IMCs 1572 and 1582 couple the processors to respective memories, namely a memory 1532 and a memory 1534, which may be portions of main memory locally attached to the respective processors.

Processors 1570, 1580 may each exchange information with a chipset 1590 via individual P-P interfaces 1552, 1554 using point-to-point interface circuits 1576, 1594, 1586, 1598. Chipset 1590 may optionally exchange information with the coprocessor 1538 via a high performance interface 1539. In one embodiment, the coprocessor 1538 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1590 may be coupled to a first bus 1516 via an interface 1596. In one embodiment, first bus 1516 may be a peripheral component interconnect (PCI) bus, or a bus such as a PCI Express bus or another third generation IO interconnect bus, by way of nonlimiting example.

As shown in FIGURE 15, various IO devices 1514 may be coupled to first bus 1516, along with a bus bridge 1518 which couples first bus 1516 to a second bus 1520. In one embodiment, one or more additional processor(s) 1515, such as coprocessors, high-throughput MIC processors, GPGPUs, accelerators (such as, e.g., graphics accelerators or DSP units), field programmable gate arrays, or any other processor, are coupled to first bus 1516. In one embodiment, second bus 1520 may be a low pin count (LPC) bus. Various devices may be coupled to a second bus 1520 including, for example, a keyboard and/or mouse 1522, communication devices 1527 and a storage unit 1528 such as a disk drive or other mass storage device which may include instructions or code and data 1530, in one embodiment. Further, an audio IO 1524 may be coupled to the second bus 1520. Note that other architectures are possible. For example, instead of the point-to-point architecture of FIGURE 15, a system may implement a multidrop bus or other such architecture.

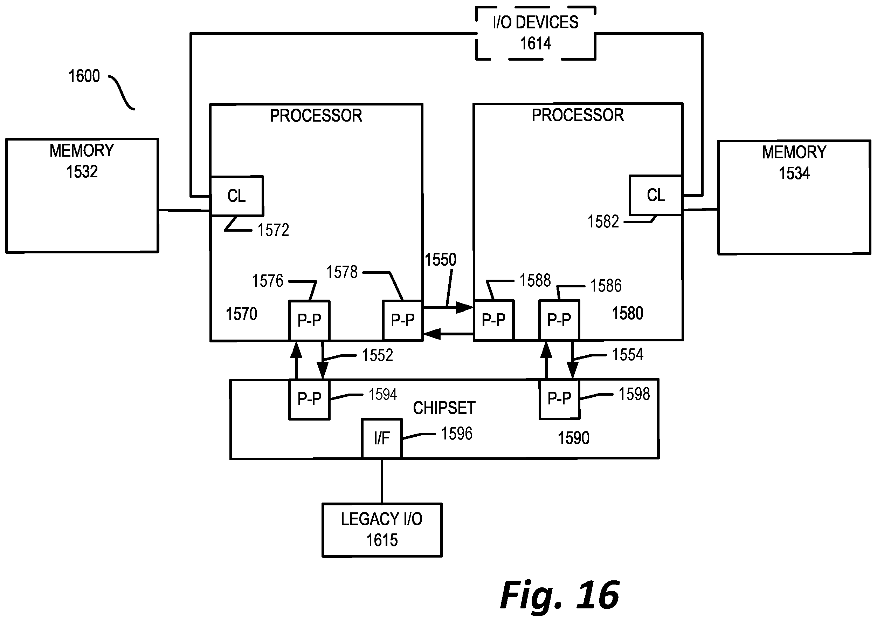

Referring now to **FIGURE 16,** shown is a block diagram of a second more specific example system 1600. FIGURES 15 and 16 bear like reference numerals, and certain aspects of FIGURE 15 have been omitted from FIGURE 16 in order to avoid obscuring other aspects of FIGURE 16.

FIGURE 16 illustrates that the processors 1570, 1580 may include integrated memory and IO control logic ("CL") 1572 and 1582, respectively. Thus, the CL 1572, 1582 include IMC units and include IO control logic. FIGURE 16 illustrates that not only are the memories 1532, 1534 coupled to the CL 1572, 1582, but also that IO devices 1614 are also coupled to the control logic 1572, 1582. Legacy IO devices 1615 are coupled to the chipset 1590.

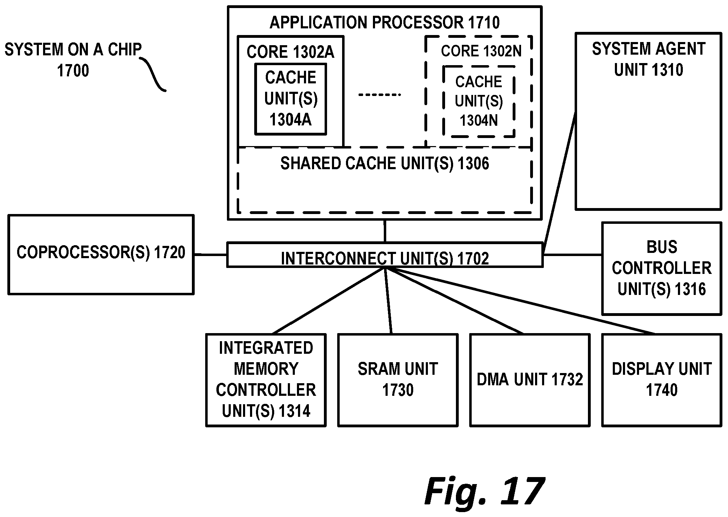

Referring now to **FIGURE 17,** shown is a block diagram of a system-on-a-chip (SoC) 1700 in accordance with an embodiment. Similar elements in FIGURE 13 bear like reference numerals. Also, dashed lined boxes are optional features on more advanced SoCs. In FIGURE 17, an interconnect unit(s) 1702 is coupled to: an application processor 1710 which includes a set of one or more cores 1302A-N and shared cache unit(s) 1306; a system agent unit 1310; a bus controller unit(s) 1316; IMC unit(s) 1314; a set of one or more coprocessors 1720 which may include integrated graphics logic, an image processor, an audio processor, and a video processor; a static random access memory (SRAM) unit 1730; a direct memory access (DMA) unit 1732; and a display unit 1740 for coupling to one or more external displays. In one embodiment, the coprocessor(s) 1720 includes a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Some embodiments may be implemented as computer programs or program code executing on programmable systems comprising at least one processor, a storage system (including volatile and nonvolatile memory and/or storage elements), at least one input device, and at least one output device.

Program code, such as code 1530 illustrated in FIGURE 15, may be applied to input instructions to perform the functions described herein and generate output information. The output information may be applied to one or more output devices, in known fashion. For purposes of this application, a processing system includes any system that has a processor, such as, for example, a DSP, a microcontroller, an application-specific integrated circuit (ASIC), or a microprocessor.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "intellectual property (IP) cores" may be stored on a tangible, machine-readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard discs, any other type of disk including floppy disks, optical disks, compact disc read-only memories (CD-ROMs), compact disc rewritables (CD-RWs), and magneto-optical disks, semiconductor devices such as ROMs, random access memories (RAMs) such as DRAMs, SRAMs, erasable programmable read-only memories (EPROMs), flash memories, electrically erasable programmable read-only memories (EEPROMs), PCM, magnetic or optical cards, or any other type of media suitable for storing electronic instructions.

Accordingly, some embodiments also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphing, etc.)

In some cases, an instruction converter may be used to convert an instruction from a source instruction set to a target instruction set. For example, the instruction converter may translate (e.g., using static binary translation or dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

The foregoing outlines features of one or more embodiments of the subject matter disclosed herein. These embodiments are provided to enable a person having ordinary skill in the art (PHOSITA) to better understand various aspects of the present disclosure. Certain well-understood terms, as well as underlying technologies and/or standards may be referenced without being described in detail. It is anticipated that the PHOSITA will possess or have access to background knowledge or information in those technologies and standards sufficient to practice the teachings of the present specification.

The PHOSITA will appreciate that they may readily use the present disclosure as a basis for designing or modifying other processes, structures, or variations for carrying out the same purposes and/or achieving the same advantages of the embodiments introduced herein. The PHOSITA will also recognize that such equivalent constructions do not depart from the scope of the present disclosure, and that they may make various changes, substitutions, and alterations herein without departing from the scope of the present disclosure.

In the foregoing description, certain aspects of some or all embodiments are described in greater detail than is strictly necessary for practicing the appended claims. These details are provided by way of nonlimiting example only, for the purpose of providing context and illustration of the disclosed embodiments. Such details should not be understood to be required, and should not be "read into" the claims as limitations. The phrase may refer to "an embodiment" or "embodiments." These phrases, and any other references to embodiments, should be understood broadly to refer to any combination of one or more embodiments. Furthermore, the several features disclosed in a particular "embodiment" could just as well be spread across multiple embodiments. For example, if features 1 and 2 are disclosed in "an embodiment," embodiment A may have feature 1 but lack feature 2, while embodiment B may have feature 2 but lack feature 1.

This specification may provide illustrations in a block diagram format, wherein certain features are disclosed in separate blocks. These should be understood broadly to disclose how various features interoperate, but are not intended to imply that those features must necessarily be embodied in separate hardware or software. Furthermore, where a single block discloses more than one feature in the same block, those features need not necessarily be embodied in the same hardware and/or software. For example, a computer "memory" could in some circumstances be distributed or mapped between multiple levels of cache or local memory, main memory, battery-backed volatile memory, and various forms of persistent memory such as a hard disk, storage server, optical disk, tape drive, or similar. In certain embodiments, some of the components may be omitted or consolidated. In a general sense, the arrangements depicted in the FIGURES may be more logical in their representations, whereas a physical architecture may include various permutations, combinations, and/or hybrids of these elements. Countless possible design configurations can be used to achieve the operational objectives outlined herein. Accordingly, the associated infrastructure has a myriad of substitute arrangements, design choices, device possibilities, hardware configurations, software implementations, and equipment options.

References may be made herein to a computer-readable medium, which may be a tangible and non-transitory computer-readable medium. As used in this specification and throughout the claims, a "computer-readable medium" should be understood to include one or more computer-readable mediums of the same or different types. A computer-readable medium may include, by way of nonlimiting example, an optical drive (e.g., CD/DVD/Blu-Ray), a hard drive, a solid-state drive, a flash memory, or other nonvolatile medium. A computer-readable medium could also include a medium such as a ROM, an FPGA or ASIC configured to carry out the desired instructions, stored instructions for programming an FPGA or ASIC to carry out the desired instructions, an IP block that can be integrated in hardware into other circuits, or instructions encoded directly into hardware or microcode on a processor such as a microprocessor, DSP, microcontroller, or in any other suitable component, device, element, or object where appropriate and based on particular needs. A non-transitory storage medium herein is expressly intended to include any non-transitory special-purpose or programmable hardware configured to provide the disclosed operations, or to cause a processor to perform the disclosed operations.

Various elements may be "communicatively," "electrically," "mechanically," or otherwise "coupled" to one another throughout this specification and the claims. Such coupling may be a direct, point-to-point coupling, or may include intermediary devices. For example, two devices may be communicatively coupled to one another via a controller that facilitates the communication. Devices may be electrically coupled to one another via intermediary devices such as signal boosters, voltage dividers, or buffers. Mechanically coupled devices may be indirectly mechanically coupled.

Any "module" or "engine" disclosed herein may refer to or include software, a software stack, a combination of hardware, firmware, and/or software, a circuit configured to carry out the function of the engine or module, or any computer-readable medium as disclosed above. Such modules or engines may, in appropriate circumstances, be provided on or in conjunction with a hardware platform, which may include hardware compute resources such as a processor, memory, storage, interconnects, networks and network interfaces, accelerators, or other suitable hardware. Such a hardware platform may be provided as a single monolithic device (e.g., in a PC form factor), or with some or part of the function being distributed (e.g., a "composite node" in a high-end data center, where compute, memory, storage, and other resources may be dynamically allocated and need not be local to one another).

There may be disclosed herein flow charts, signal flow diagram, or other illustrations showing operations being performed in a particular order. Unless otherwise expressly noted, or unless required in a particular context, the order should be understood to be a nonlimiting example only. Furthermore, in cases where one operation is shown to follow another, other intervening operations may also occur, which may be related or unrelated. Some operations may also be performed simultaneously or in parallel. In cases where an operation is said to be "based on" or "according to" another item or operation, this should be understood to imply that the operation is based at least partly on or according at least partly to the other item or operation. This should not be construed to imply that the operation is based solely or exclusively on, or solely or exclusively according to the item or operation.

All or part of any hardware element disclosed herein may readily be provided in an SoC, including a CPU package. An SoC represents an integrated circuit (IC) that integrates components of a computer or other electronic system into a single chip. Thus, for example, client devices or server devices may be provided, in whole or in part, in an SoC. The SoC may contain digital, analog, mixed-signal, and radio frequency functions, all of which may be provided on a single chip substrate. Other embodiments may include a multichip module (MCM), with a plurality of chips located within a single electronic package and configured to interact closely with each other through the electronic package.

In a general sense, any suitably-configured circuit or processor can execute any type of instructions associated with the data to achieve the operations detailed herein. Any processor disclosed herein could transform an element or an article (for example, data) from one state or thing to another state or thing. Furthermore, the information being tracked, sent, received, or stored in a processor could be provided in any database, register, table, cache, queue, control list, or storage structure, based on particular needs and implementations, all of which could be referenced in any suitable timeframe. Any of the memory or storage elements disclosed herein, should be construed as being encompassed within the broad terms "memory" and "storage," as appropriate.

Computer program logic implementing all or part of the functionality described herein is embodied in various forms, including, but in no way limited to, a source code form, a computer executable form, machine instructions or microcode, programmable hardware, and various intermediate forms (for example, forms generated by an assembler, compiler, linker, or locator).

In an example, source code includes a series of computer program instructions implemented in various programming languages, such as an object code, an assembly language, or a high level language such as OpenCL, FORTRAN, C, C++, JAVA, or HTML for use with various operating systems or operating environments, or in hardware description languages such as Spice, Verilog, and VHDL. The source code may define and use various data structures and communication messages. The source code may be in a computer executable form (e.g., via an interpreter), or the source code may be converted (e.g., via a translator, assembler, or compiler) into a computer executable form, or converted to an intermediate form such as byte code. Where appropriate, any of the foregoing may be used to build or describe appropriate discrete or integrated circuits, whether sequential, combinatorial, state machines, or otherwise.

In one example embodiment, any number of electrical circuits of the FIGURES may be implemented on a board of an associated electronic device. The board can be a general circuit board that can hold various components of the internal electronic system of the electronic device and, further, provide connectors for other peripherals. Any suitable processor and memory can be suitably coupled to the board based on particular configuration needs, processing demands, and computing designs. Note that with the numerous examples provided herein, interaction may be described in terms of two, three, four, or more electrical components. However, this has been done for purposes of clarity and example only. It should be appreciated that the system can be consolidated or reconfigured in any suitable manner. Along similar design alternatives, any of the illustrated components, modules, and elements of the FIGURES may be combined in various possible configurations, all of which are within the broad scope of this specification.

Numerous other changes, substitutions, variations, alterations, and modifications may be ascertained to one skilled in the art and it is intended that the present disclosure encompass all such changes, substitutions, variations, alterations, and modifications as falling within the scope of the appended claims.

Example Implementations

There is disclosed in one example, a microprocessor, comprising: an execution unit; a memory integrity engine (MIE) comprising a key rotation engine to rotate encryption keys for a secure memory region; and a memory hash register (MHR) to maintain a hash of a secure memory region state.

There is further disclosed an example processor, further comprising a message authentication code (MAC) data structure for encryption keys, wherein the key rotation engine is to read a MAC with an old key and re-encrypt the MAC with a new key.

There is further disclosed an example processor, wherein the MIE is to iterate over the encryption keys periodically.

There is further disclosed an example processor, wherein the MIE is to update the MHR periodically.

There is further disclosed an example processor, wherein the MIE is to update the MHR after each rotation of an encryption key.

There is further disclosed an example processor, wherein the MIE is to compute a value of the MHR as a running hash.

There is further disclosed an example processor, wherein a next value of the running hash is a function of a previous value of the running hash and an encryption key being updated.

There is further disclosed an example processor, wherein the function is an exclusive-OR (XOR).

There is further disclosed an example processor, wherein the function is a Galois field multiplication function (GFMUL).

There is further disclosed an example processor, wherein the MIE is to store a per-cycle MHR value.

There is further disclosed an example processor, wherein the per-cycle MHR value is stored on-die.

There is further disclosed an example processor, wherein the MIE is to compare the per-cycle MHR value to a running MHR value at the end of a key rotation cycle.

There is further disclosed an example processor, wherein the MIE is to raise a security exception in the case of a mismatch between the per-cycle MHR value and the running MHR value.

There is also disclosed an example computing system, comprising: a memory; a trusted execution environment operable to secure a region of the memory; a memory integrity engine with deterministic rotation (MIE-DR) to encrypt the secure region of the memory, the MIE-DR comprising a key rotation engine to rotate message authentication code (MAC) keys within a MAC table for the secure region, and a memory hash register (MHR) to maintain a current hash of the MAC table.

There is further disclosed an example computing system, further comprising a basic input-output system (BIOS), comprising instructions to initialize the MAC table.

There is further disclosed an example computing system, wherein the BIOS further comprises instructions to initialize the MHR.

There is further disclosed an example computing system, wherein the key rotation engine is to read a MAC with an old key and re-encrypt the MAC with a new key.

There is further disclosed an example computing system, wherein the MIE-DR is to update the MHR periodically.

There is further disclosed an example computing system, wherein the MIE-DR is to rotate MAC keys periodically.

There is further disclosed an example computing system, wherein the MIE-DR is to update the MHR after each rotation of a MAC key.

There is further disclosed an example computing system, wherein the MIE-DR is to compute a value of the MHR as a running hash.

There is further disclosed an example computing system, wherein a next value of the running hash is a function of a previous value of the running hash and a MAC key being updated.

There is further disclosed an example computing system, wherein the function is an exclusive-OR (XOR).

There is further disclosed an example computing system, wherein the function is a Galois field multiplication function (GFMUL).

There is further disclosed an example computing system, wherein the MIE is to store a per-cycle MHR value.

There is further disclosed an example computing system, wherein the per-cycle MHR value is stored on-die.

There is further disclosed an example computing system, wherein the MIE-DR is to compare the per-cycle MHR value to a running MHR value at the end of a key rotation cycle.

There is further disclosed an example computing system, wherein the MIE is to raise a security exception in the case of a mismatch between the per-cycle MHR value and the running MHR value.

There is further disclosed an example computing system, further comprising an error correction code (ECC) memory for correcting memory errors.

There is further disclosed an example computing system, wherein the MIE-DR is to store the MAC table in the ECC memory.

There is further disclosed an example computing system, wherein the MIE-DR is to combine the MAC table with the ECC memory.

There is also disclosed an example method of providing deterministic key rotation for an encrypted computer memory, comprising: initializing an encrypted message authentication code (MAC) table, the encrypted MAC table comprising MAC values for accessing an encrypted memory, the MAC values encrypted with an encryption key each; initializing a memory hash register (MHR) with a hash of the MAC table; periodically sequentially obsoleting and refreshing MAC values in the MAC tables; and after an update to the MAC table, recalculating the hash of the MHR.

There is further disclosed an example method, wherein periodically sequentially obsoleting and refreshing MAC values in the MAC tables comprises reading a MAC with an old encryption key and re-encrypting the MAC with a new encryption key.

There is further disclosed an example method, further comprising maintaining value of the MHR as a running hash.

There is further disclosed an example method, wherein a next value of the running hash is a function of a previous value of the running hash and a MAC key being updated.

There is further disclosed an example method, wherein the function is an exclusive-OR (XOR).

There is further disclosed an example method, wherein the function is a Galois field multiplication function (GFMUL).

There is further disclosed an example method, further comprising storing a per-cycle MHR value.

There is further disclosed an example method, wherein storing the per-cycle MHR value comprises storing on-die with a microprocessor core.

There is further disclosed an example method, further comprising comparing the per-cycle MHRvalue to a running MHRvalue at the end of a key rotation cycle.

There is further disclosed an example method, further comprising raising a security exception in the case of a mismatch between the per-cycle MHR value and the running MHR value.

There is further disclosed an example method, further comprising storing a per-cycle MHR value.

There is further disclosed an example method, further comprising comparing the per-cycle MHR value to a running MHR value at the end of a key rotation cycle, and raising a security exception in the case of a mismatch.

There is also disclosed an example apparatus comprising means for performing the method of a number of the above examples.

There is also disclosed an example apparatus, wherein the means for performing the method comprise a processor and a memory.

There is also disclosed an example apparatus, wherein the memory comprises machine-readable instructions, that when executed cause the apparatus to perform the method of a number of the above examples.

There is also disclosed an example apparatus, wherein the apparatus is a computing system.

There is also disclosed an example of at least one computer-readable medium comprising instructions that, when executed, implement a method or realize an apparatus as illustrated in a number of the above examples.

## Claims

1. A method (1000) of providing deterministic key rotation for an encrypted computer memory, the method comprising:

   initializing an encrypted message authentication code table, the encrypted message authentication code table comprising message authentication code values for accessing an encrypted memory, the message authentication code values encrypted with an encryption key each;
   initializing a memory hash register with a hash of the message authentication code table;
   periodically sequentially obsoleting and refreshing (1016) message authentication code values in the message authentication code table;
   maintaining a value of the memory hash register as a running hash during a key rotation cycle (1020), wherein a next value of the running hash is a function of a previous value of the running hash and a message authentication code key being updated; and
   after an update to the message authentication code table, recalculating the hash of the memory hash register (1032).

2. The method (1000) of claim 1, wherein periodically sequentially obsoleting and refreshing (1016) message authentication code values in the message authentication code tables comprises reading a message authentication code with an old encryption key and re-encrypting the message authentication code with a new encryption key.

3. The method (1000) of claim 1 or 2, wherein the function is an exclusive-OR.

4. The method (1000) of claim 1 or 2, wherein the function is a Galois field multiplication function.

5. The method (1000) of any of claims 1 to 4, further comprising storing a per-cycle memory hash register value.

6. The method (1000) of claim 5, wherein storing the per-cycle memory hash register value comprises storing on-die with a microprocessor core.

7. The method (1000) of claim 5, further comprising comparing (1028) the per-cycle memory hash register value to a running memory hash register value at the end of a key rotation cycle.

8. The method (1000) of claim 7, further comprising raising (1036) a security exception in the case of a mismatch between the per-cycle memory hash register value and the running memory hash register value.

**9.** An apparatus comprising means for performing the method of any of claims 1 to 8.

**10.** The apparatus of claim 9, wherein the means for performing the method comprise a processor and a memory.

**11.** The apparatus of claim 10, wherein the memory comprises machine-readable instructions, that when executed cause the apparatus to perform the method of any of claims 1 to 8.

**12.** The apparatus of any of claims 9 to 11, wherein the apparatus is a computing system.

**13.** At least one computer readable medium comprising instructions that, when executed, implement a method or realize an apparatus as claimed in any of claims 1 to 12.

**Patentansprüche**

**1.** Verfahren (1000) zum Bereitstellen einer deterministischen Schlüsselrotation für einen verschlüsselten Computerspeicher, wobei das Verfahren umfasst:

Initialisieren einer verschlüsselten Nachrichten-Authentifizierungscodetabelle, wobei die verschlüsselte Nachrichten-Authentifizierungscodetabelle Nachrichten-Authentifizierungscodewerte für den Zugriff auf einen verschlüsselten Speicher umfasst, wobei die Nachrichten-Authentifizierungscodewerte jeweils mit einem Verschlüsselungsschlüssel verschlüsselt sind;
Initialisieren eines Speicher-Hashregisters mit einem Hash der Nachrichten-Authentifizierungscodetabelle;
periodisches sequenzielles Veralten und Auffrischen (1016) von Nachrichten-Authentifizierungscodewerten in der Nachrichten-Authentifizierungscodetabelle;
Aufrechterhalten eines Wertes des Speicher-Hashregisters als ein laufender Hash während eines Schlüsselrotationszyklus (1020), wobei ein nächster Wert des laufenden Hash eine Funktion eines vorherigen Wertes des laufenden Hash und eines Nachrichten-Authentifizierungscodeschlüssels ist, der aktualisiert wird; und
nach einer Aktualisierung der Nachrichten-Authentifizierungcodetabelle, erneutes Berechnen des Hash des Speicher-Hashregisters (1032).

**2.** Verfahren (1000) nach Anspruch 1, wobei das periodisch sequenzielle Veralten und Auffrischen (1016) von Nachrichten-Authentifizierungscodewerten in den Nachrichten-Authentifizierungscodetabellen das Lesen eines Nachrichten-Authentifizierungscodes mit einem alten Verschlüsselungscode und das erneute Verschlüsseln des Nachrichten-Authentifizierungscodes mit einem neuen Verschlüsselungscode umfasst.

**3.** Verfahren (1000) nach Anspruch 1 oder 2, wobei die Funktion ein Exklusiv-ODER ist.

**4.** Verfahren (1000) nach Anspruch 1 oder 2, wobei die Funktion eine Galois-Feld-Multiplikationsfunktion ist.

**5.** Verfahren (1000) nach einem der Ansprüche 1 bis 4, das ferner das Speichern eines Speicher-Hashregisterwertes pro Zyklus umfasst.

**6.** Verfahren (1000) nach Anspruch 5, wobei das Speichern des Speicher-Hashregisterwertes pro Zyklus das Speichern auf dem Chip mit einem Mikroprozessorkern umfasst.

**7.** Verfahren (1000) nach Anspruch 5. das ferner das Vergleichen (1028) des Speicher-Hashregisterwertes pro Zyklus mit einem laufenden Speicher-Hashregisterwert am Ende eines Schlüsselrotationszyklus umfasst.

**8.** Verfahren (1000) nach Anspruch 7, das ferner das Auslösen (1036) einer Sicherheitsausnahme im Falle einer Diskrepanz zwischen dem Speicher-Hashregisterwert pro Zyklus und dem laufenden Speicher-Hashregisterwert umfasst.

**9.** Vorrichtung, die Mittel zum Durchführen des Verfahrens nach einem der Ansprüche 1 bis 8 umfasst.

**10.** Vorrichtung nach Anspruch 9, wobei die Mittel zum Durchführen des Verfahrens einen Prozessor und einen Speicher umfassen.

**11.** Vorrichtung nach Anspruch 10, wobei der Speicher maschinenlesbare Anweisungen umfasst, die, wenn sie ausgeführt werden, die Vorrichtung veranlassen, das Verfahren nach einem der Ansprüche 1 bis 8 durchzuführen.

**12.** Vorrichtung nach einem der Ansprüche 9 bis 11, wobei die Vorrichtung ein Rechensystem ist.

**13.** Mindestens ein computerlesbares Medium, das Anweisungen umfasst, die, wenn sie ausgeführt werden, ein Verfahren implementieren oder eine Vorrichtung nach einem der Ansprüche 1 bis 12 realisieren.

**Revendications**

**1.** Procédé (1000) permettant d'effectuer une rotation déterministe des clés pour une mémoire informatique cryptée, le procédé comprenant les étapes suivantes :

   initialiser une table de codes d'authentification de messages cryptés, la table de codes d'authentification de messages cryptés comprenant des valeurs de codes d'authentification de messages pour accéder à une mémoire cryptée, les valeurs de codes d'authentification de messages étant cryptées avec une clé de cryptage pour chacune d'entre elles ;
   initialiser un registre de hachage de la mémoire avec un hachage de la table de codes d'authentification de messages ;
   annuler et rafraîchir de manière séquentielle et périodique (1016) des valeurs de code d'authentification de messages dans la table de codes d'authentification de messages ;
   maintenir une valeur du registre de hachage de la mémoire en tant que hachage en cours pendant un cycle de rotation des clés (1020), dans lequel une prochaine valeur du hachage en cours est une fonction d'une valeur précédente du hachage en cours et d'une clé de code d'authentification de message mise à jour ; et
   après une mise à jour de la table de codes d'authentification de messages, recalculer le hachage du registre de hachage de la mémoire (1032).

**2.** Procédé (1000) selon la revendication 1, dans lequel l'obsolescence et le rafraîchissement séquentiels périodiques (1016) des valeurs de code d'authentification de message dans les tables de codes d'authentification de messages comprennent la lecture d'un code d'authentification de message avec une ancienne clé de cryptage et le recryptage du code d'authentification de message avec une nouvelle clé de cryptage.

**3.** Procédé (1000) selon la revendication 1 ou la revendication 2, dans lequel la fonction est un OU exclusif.

**4.** Procédé (1000) selon la revendication 1 ou la revendication 2, dans lequel la fonction est une fonction de multiplication de champ de Galois.

**5.** Procédé (1000) selon l'une quelconque des revendications 1 à 4, comprenant en outre le stockage d'une valeur de registre de hachage de mémoire par cycle.

**6.** Procédé (1000) selon la revendication 5, dans lequel le stockage de la valeur de registre de hachage de mémoire par cycle comprend le stockage sur puce avec un coeur de microprocesseur.

**7.** Procédé (1000) selon la revendication 5, comprenant en outre la comparaison (1028) de la valeur de registre de hachage de mémoire par cycle à une valeur de registre de hachage de mémoire en cours à la fin d'un cycle de rotation des clés.

**8.** Procédé (1000) selon la revendication 7, comprenant en outre la levée (1036) d'une exception de sécurité en cas de non-concordance entre la valeur de registre de hachage de mémoire par cycle et la valeur de registre de hachage de mémoire en cours.

**9.** Appareil comprenant des moyens pour exécuter le procédé selon l'une quelconque des revendications 1 à 8.

**10.** Appareil selon la revendication 9, dans lequel les moyens d'exécution du procédé comprennent un processeur et une mémoire.

**11.** Appareil selon la revendication 10, dans lequel la mémoire comprend des instructions lisibles par une machine qui, lorsqu'elles sont exécutées, permettent à l'appareil d'exécuter le procédé selon l'une quelconque des revendications 1 à 8.

12. Appareil selon l'une quelconque des revendications 9 à 11, dans lequel l'appareil est un système informatique.

13. Au moins un support lisible par ordinateur comprenant des instructions qui, lorsqu'elles sont exécutées, mettent en œuvre un procédé ou réalisent un appareil tel que revendiqué dans l'une quelconque des revendications 1 à 12.

**PROCESSOR 110**

**SYSTEM AGENT 180**

**MIE 150**

**LLC 165**  **CACHE 160**

**CORE(S) 140**

**MEMORY CONTROLLER 130**

**MAIN MEMORY 120**

**PROTECTED REGION 125**

*Fig. 1*

# Fig. 2

**CPU 300**

| CORE0 310-0 | CORE1 310-1 | ... | COREn 310-n | GPU 320 |

**SHARED CACHE 330**

**TMP MODULE 340**

KEY STORAGE 343

TMP CACHE 345

| ENCRYPTION/ DECRYPTION LOGIC 342 | INTEGRITY VALIDATION LOGIC 344 | REPLAY PROTECTION LOGIC 346 | ENCRYPTION/ DECRYPTION LOGIC 348 |

POWER CONTROL UNIT 350

SECURITY ENGINE 360

*Fig. 3*

EP 3 758 287 B1

400

```
        START
          │
          ▼
┌─────────────────────────────┐
│   RECEIVE WRITE REQUEST      │  410
└─────────────────────────────┘
          │
          ▼
┌─────────────────────────────┐
│ ENCRYPT DATA ACCORDING TO    │  420
│ DATA DEPENDENT ENCRYPTION    │
│ MODE                         │
└─────────────────────────────┘
          │
          ▼
┌─────────────────────────────┐
│ GENERATE MAC BASED ON        │  430
│ ENCRYPTED DATA               │
└─────────────────────────────┘
          │
          ▼
┌─────────────────────────────┐
│ ENCRYPT MAC WITH CURRENT KEY │  440
└─────────────────────────────┘
          │
          ▼
┌─────────────────────────────┐
│ SEND ENCRYPTED DATA AND      │  450
│ ENCRYPTED MAC TO MEMORY      │
└─────────────────────────────┘
          │
          ▼
        DONE    490
```

## Fig. 4

*500*

START

RECEIVE READ REQUEST | 510

OBTAIN REQUESTED ENCRYPTED DATA AND ENCRYPTED MAC FROM MEMORY | 520

GENERATE VALID MAC BASED ON ENCRYPTED DATA | 530

DECRYPT DATA ACCORDING TO DATA DEPENDENT DECRYPTION MODE | 540

DECRYPT MAC WITH CURRENT KEY | 550

DECRYPTED MAC MATCH VALIDATION MAC? | 560

YES

NO

570 | SEND DATA TO DESTINATION

580 | REPORT INTEGRITY VIOLATION

590 | DONE

*Fig. 5*

**600**

**605**
LOAD OLD KEY AND GENERATE NEW KEY

**610**
SET CURRENT RE-MAC ADDRESS TO BASE MAC ADDRESS

**620**
TMP MODULE IDLE OR RE-MAC TIMER EXPIRED? ——— NO

YES

**630**
LOAD MAC STORED AT CURRENT RE-MAC ADDRESS ASSOCIATED DATA AND RE-KEY MAC USING NEW KEY

**640**
UPDATE CURRENT RE-MAC ADDRESS TO NEXT LOCATION

**645**
YES——— CURRENT RE-MAC ADDRESS = END MAC ADDR? ———NO

**Fig. 6**

**650**

OBTAIN ENCRYPTED MAC FROM MEMORY **660**

DECRYPT MAC WITH OLD KEY **670**

ENCRYPT MAC WITH NEW KEY **680**

SEND ENCRYPTED MAC TO MEMORY **690**

*Fig. 7*

800

812a

810

NEW KEY 830

812n

OLD KEY 835

822a

CURRENT RE-MAC
ADDRESS 835

820

822n

*Fig. 8*

Fig. 9

*Fig. 10*

```
┌─────────────────┐                              ┌─────────────────┐
│                 │                              │                 │
│   ON_DIE_MHR    │                              │    NEW_HASH     │
│      1104       │                              │      1108       │
│                 │                              │                 │
└─────────────────┘                              └─────────────────┘
```

– – – – – – – – – – – – – – – – – DIE BOUNDARY – – – – – – – – – – – – – – – – – – – – –

```
┌──────────────────────┬──────────────────────────────────────────┐
│                      │                                          │
│    (REGION 1112)     │              REGION 1116                 │
│ COVERED BY NEW_HASH  │        (COVERED BY ON_DIE_HMR)           │
│                      │                                          │
└──────────────────────┴──────────────────────────────────────────┘
                       ▲
                       │
                  CURRENT RE-MAC
                    ADDRESS
```

*Fig. 11*

START

1204

WRITE REQUEST TO MEMORY

1208

READ OLD_MAC = OLD/CURRENT MAC ASSOCIATED WITH ADDRESS WRITTEN

1212

WRITE ADDR <= REMAC_ADDR?

YES

NO

1216

UNROLL FROM HASH REGISTER
NEW_HASH = NEW_HASH XOR OLD_HASH

1220

UNROLL FROM HASH REGISTER
ON_DIE_MHR = ON_DIE_MHR XOR OLD_MAC

1224

UPDATE HASH REGISTER WITH NEW MAC
NEW_HASH = NEW_HASH XOR NEW_MAC

1228

UPDATE HASH REGISTER WITH NEW MAC
ON_DIE_MHR = ON_DIE_MHR XOR NEW_MAC

1298

DONE

1200

*Fig. 12*

PROCESSOR 1300

SPECIAL PURPOSE LOGIC 1308

CORE 1302A
CACHE UNIT(S) 1304A

CORE 1302N
CACHE UNIT(S) 1304N

SHARED CACHE UNIT(S) 1306

RING 1312

SYSTEM AGENT UNIT 1310

INTEGRATED MEMORY CONTROLLER UNIT(S) 1314

BUS CONTROLLER UNIT(S) 1316

*Fig. 13*

*Fig. 14*

**Fig. 15**

EP 3 758 287 B1

Fig. 16

EP 3 758 287 B1

Fig. 17

EP 3 758 287 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016283750 A1
- US 2017300713 A1
- US 2018276392 A
- US 2016328335 A1

**Non-patent literature cited in the description**

- **T. KIM.** *ShieldStore*